(19) Europäisches Patentamt
European Patent Office
Office européen des brevets

(11) Veröffentlichungsnummer: **0 355 008 B1**

(12) **EUROPÄISCHE PATENTSCHRIFT**

(45) Veröffentlichungstag der Patentschrift: **13.04.94**

(51) Int. Cl.$^5$: **C07F 7/08**, C09K 19/40

(21) Anmeldenummer: **89114603.7**

(22) Anmeldetag: **08.08.89**

# (54) Organosilylalkyl- oder -alkenyl- Verbindungen, Verfahren zu ihrer Herstellung und ihre Verwendung in flüssigkristallinen Mischungen.

(30) Priorität: **13.08.88 DE 3827600**

(43) Veröffentlichungstag der Anmeldung:
**21.02.90 Patentblatt 90/08**

(45) Bekanntmachung des Hinweises auf die Patenterteilung:
**13.04.94 Patentblatt 94/15**

(84) Benannte Vertragsstaaten:
**AT BE CH DE FR GB IT LI NL SE**

(56) Entgegenhaltungen:
**US-A- 4 316 041**

(73) Patentinhaber: **HOECHST AKTIENGESELLSCHAFT**

**D-65926 Frankfurt(DE)**

(72) Erfinder: **Hemmerling, Wolfgang, Dr.**
**Billtalstrasse 32**
**D-6231 Sulzbach (Taunus)(DE)**
Erfinder: **Dübal, Hans-Rolf, Dr.**
**Heuhohlweg 6**
**D-6240 Königstein/Taunus(DE)**
Erfinder: **Escher, Claus, Dr.**
**Amselweg 3**
**D-6109 Mühltal(DE)**
Erfinder: **Illian, Gerhard, Dr.**
**Farbenstrasse 62**
**D-6230 Frankfurt am Main 80(DE)**
Erfinder: **Inoguchi, Yoshio, Dr.**
**4-12-201, Fujicho 4-chome**
**Hohya-shi Tokyo(JP)**
Erfinder: **Müller, Ingrid, Dr.**
**Am Pfingstbrunnen 1**
**D-6238 Hofheim am Taunus(DE)**
Erfinder: **Murakami, Mikio**
**Bahnstrasse 2c**
**D-6240 Königstein/Taunus(DE)**
Erfinder: **Ohlendorf, Dieter, Dr.**
**Am Kühlen Grund 4**
**D-6237 Liederbach(DE)**
Erfinder: **Wingen, Rainer, Dr.**
**Rotkäppchenweg 10**
**D-6234 Hattersheim am Main(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die ungewöhnliche Kombination von anisotropem und fluidem Verhalten der Flüssigkristalle hat zu ihrer Verwendung in einer Vielzahl von elektro-optischen Schalt- und Anzeigevorrichtungen geführt. Dabei können ihre elektrischen, magnetischen, elastischen und/oder thermischen Eigenschaften zu Orientierungsänderungen benutzt werden. Optische Effekte lassen sich dann beispielsweise mit Hilfe der Doppelbrechung, der Einlagerung dichroitisch absorbierender Farbstoffmoleküle ("guest-host mode") oder der Lichtstreuung erzielen.

Zur Erfüllung der ständig steigenden Praxisanforderungen auf den verschiedenen Anwendungsgebieten besteht laufend ein Bedarf an neuen verbesserten Flüssigkristall ("liquid crystal")-Mischungen und somit auch an einer Vielzahl mesogener Verbindungen unterschiedlichster Struktur. Dies gilt sowohl für die Gebiete, bei denen nematische LC-Phasen (z. B. TN = "twisted nematic", STN = "supertwisted nematic", SBE = "supertwisted birefringence effect", ECB = "electrically controlled birefringence") verwendet werden, als auch für solche mit smektischen LC-Phasen (z. B. ferroelektrische, elektrokline).

Viele der für LC-Mischungen geeigneten Verbindungen lassen sich durch ein Aufbauprinzip (Bauschema) beschreiben [siehe z. B. J. Am. Chem. Soc. 108, 4736 (1986), Struktur I; Science 231, 350 (1986), Fig. 1 A; J. Am. Chem. Soc. 108, 5210 (1986), Fig. 3], bei dem Kerne aus cyclischen Verbindungen - Aromaten, Heteroaromaten, aber auch gesättigte Ringsysteme - mit geradkettigen oder in der Kette durch kleine Gruppen (z. B. Methyl, Chlor) substituierten und somit verzweigten Alkylseitenketten verknüpft sind.

Verbindungen, die eine terminal-silyl-substituierte Alkylkette als Teilstruktur aufweisen, sind z. B. aus der EP-A 0 136 501, den DE-A 35 21 201 und 36 01 742 bekannt. In diesen Molekülen befinden sich am Si-Atom leichthydrolisierbare Substituenten, welche diese Verbindungen insbesondere zur Erzeugung einer homöotropen Orientierung flüssigkristalliner Phasen auf Oberflächen befähigen sollen. Über ein flüssigkristallines Verhalten der Verbindungen wird nicht berichtet, lediglich über ihre Verwendung als Komponenten flüssigkristalliner Dielektrika.

Aufgabe der vorliegenden Erfindung ist es, neue, im obigen Sinn nicht-hydrolisierbare, chemisch stabile und mesogene Silicium-Verbindungen zur Verfügung zu stellen, die mit vielen anderen Komponenten zu LC-Mischungen kombiniert werden können. Die nachstehend definierten Verbindungen lösen diese Aufgabe:

Flüssigkristalline Silylalkyl- oder -alkenyl-Verbindungen der allgemeinen Formel (I)

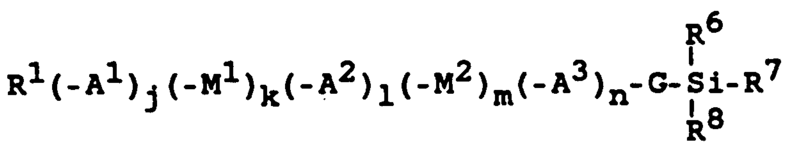 (I)

in der bedeuten:

$R^1$ geradkettiges oder verzweigtes (mit oder ohne asymmetrisches C-Atom) Alkyl oder Alkenyl mit 2 bis 16 C-Atomen, wobei auch eine oder zwei nicht-benachbarte $-CH_2$-Gruppen durch -O-, -S-, -CO-, -CO-O-, -O-CO- oder -O-CO-O ersetzt sein können und wobei auch H durch F ersetzt sein kann,
oder einer der nachfolgenden Reste $OCF_3$, $OCHF_2$

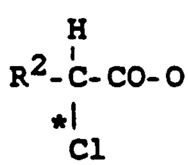 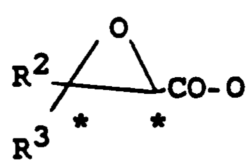 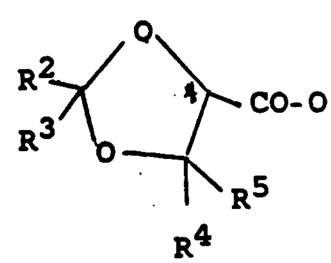

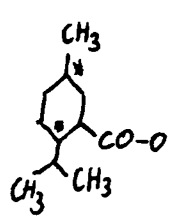 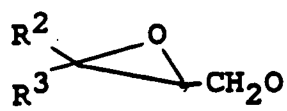 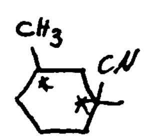

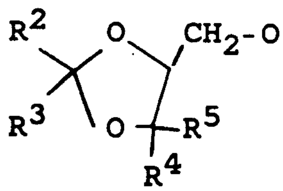

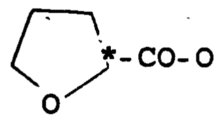

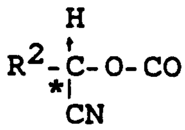

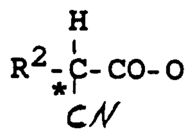

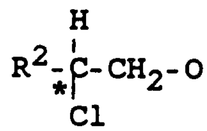

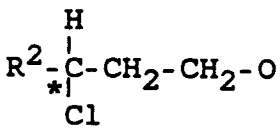

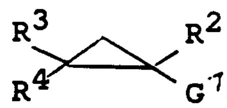

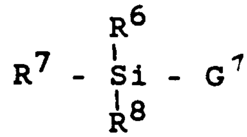

| | |
|---|---|
| $A^1,A^2,A^3$ | gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6-diyl, Pyridin-2,5-diyl, Pyrimidin-2,5-diyl, (1,3,4)-Thiadiazol-2,5-diyl, 1,3-Dioxan-2,5-diyl, 1,3-Dithian-2,5-diyl |
| $M^1,M^2$ | gleich oder verschieden CO-O, O-CO, CO-S, S-CO, $CH_2$-O, O-$CH_2$, C≡C, CH = CH |
| $G,G^1$ | geradkettiges oder verzweigtes Alkylen mit 1 bis 16 C-Atomen oder Alkenylen mit 2 bis 16 C-Atomen, bei dem auch eine oder zwei nicht-benachbarte -$CH_2$-Gruppen durch -O-, -S-, -O-CO-, -CO-O-, -S-CO- oder -CO-S- ersetzt sein können, mit der Maßgabe, daß Si nur an ein C gebunden ist, das H und/oder C als Nachbaratome hat, |
| $R^2,R^3,R^4$ | H oder geradkettiges oder verzweigtes Alkyl mit 1 bis 16 oder Alkenyl mit 2 bis 16 C-Atomen, bei dem auch eine -$CH_2$-Gruppe durch -O-, -CO-O- oder -O-CO- ersetzt sein kann, oder cyclisches Alkyl mit 3 bis 8 C-Atomen |
| $R^6,R^7,R^8$ | geradkettiges oder verzweigtes Alkyl mit 1 bis 16 C-Atomen oder Alkenyl mit 2 bis 16 C-Atomen, bei denen auch eine oder zwei nicht-benachbarte -$CH_2$-Gruppen durch -O-, -CO-O- oder -O-CO- ersetzt sein können, mit der Maßgabe, daß sie nur an ein C gebunden ist, das H und/oder C als Nachbaratome hat, oder cyclisches Alkyl mit 3 bis 8 C-Atomen, oder gemeinsam mit dem Si auch |

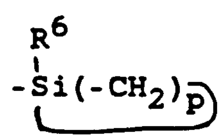 oder 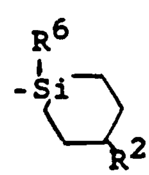

| | |
|---|---|
| j,k,l,m,n | Null oder 1 |
| p | 3 bis 7 |

mit der Maßgabe, daß j + l + n = 2 oder 3.

Bevorzugt sind solche Verbindungen, bei denen in der allgemeinen Formel (I) die Gruppierung $(-A^1)_j(-M^1)_k(-A^2)_l(-M^2)_m(-A^3)_n$- bedeutet:

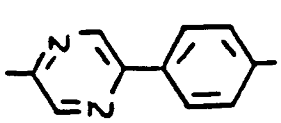 , 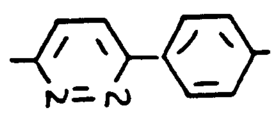 , 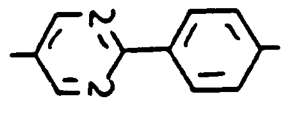 ,

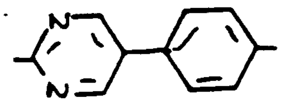 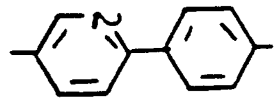 , 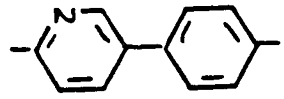 ,

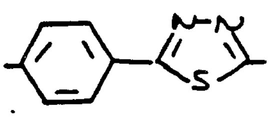 , 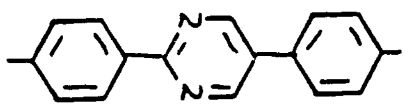 , 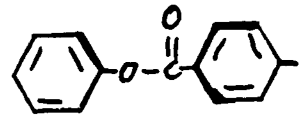

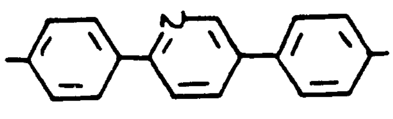 , 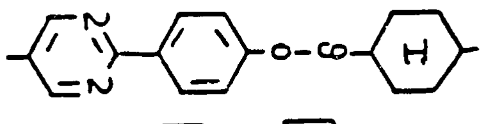 ,

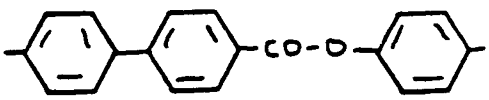 , 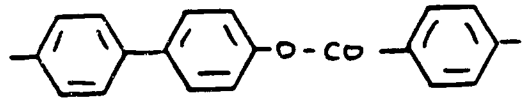 ,

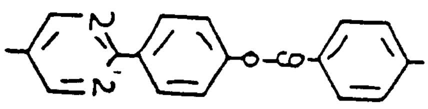 , 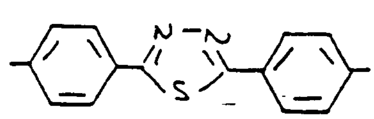 ,

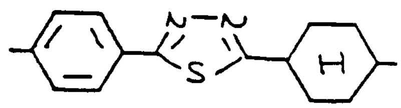 , 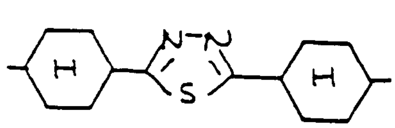 ,

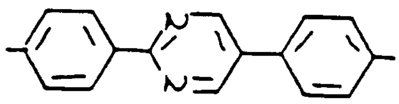 , 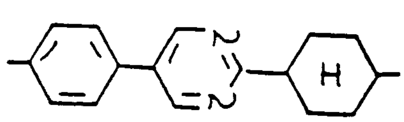

Die neuen Silylalkyl- oder -alkenyl-Verbindungen sind chemisch, photochemisch und thermisch stabil und verfügen über eine gute Mischungskompatibilität. Besonders bevorzugt sind unter den Verbindungen der allgemeinen Formel (I) solche, bei denen mindestens einer der Reste $A^1$, $A^2$, $A^3$ 1,4-Phenylen und ein weiterer Pyrimidin-2,5-diyl bedeuten.

Die Silylverbindungen zeichnen sich dadurch aus, daß die Substanzen im Vergleich zu den analogen Alkylverbindungen teilweise wesentlich niedrige Schmelzpunkte aufweisen. Der Schmelzpunkt hängt dabei entscheidend von der Stellung der Dimethylsilylgruppe in der Kette ab. Es hat sich gezeigt, daß man besonders niedrige Schmelzpunkte und breite flüssigkristalline Phasenbereiche erhält, wenn die Alkylketten G bzw. $G^1$ und $R^7$ (siehe Formel I) unabhängig voneinander zwischen 2 und 8 besonders bevorzugt 4 bis 5 $-CH_2$-Einheiten enthalten. Für niedrige Schmelzpunkte ist eine Gesamtzahl der $-CH_2$-Einheit in der Silyl-substituierten Kette zwischen 7 und 12 von Vorteil, besonders günstige Eigenschaften erhält man in Ketten mit 8 oder 9 $-CH_2$-Kettengliedern.

Ein herausragendes Merkmal der Silylverbindungen sind ihre guten Eigenschaften in Mischungen. So verfügen sie nicht nur über eine gute Mischungskompatibilität sondern beeinflussen in besonderer Weise den Schmelzpunkt von Mischungen. So konnte einerseits beobachtet werden, daß bei Raumtemperatur nahezu unlösliche Substanzklassen, bei der Verwendung von dimethylsubstituierten Verbindungen bis zu 25 und mehr Mol-% in der flüssigkristallinen Mischung in Lösung gehen und dabei teilweise zu einer beachtlichen Schmelzpunkterniedrigung und/oder zu einer ebenfalls vorteilhaften Verschiebung der Kristallisationstemperatur zu sehr niedrigen Temperaturen führen.
Diese Eigenschaften machen die Silylverbindungen als Bestandteile flüssigkristalliner Mischungen besonders interessant. Besonders bevorzugt ist dabei die Verwendung von silylsubstituierten Verbindungen der Phenylpyrimidine der Phenylbenzoate und der Phenylthiadiazole in Mischungen. Auch bei der Erniedrigung

des Schmelzpunktes spielt die Kettenlänge der Silylkomponente und die Stellung der Dimethylsilylgruppe eine wesentliche Rolle. Hierbei ist eine Gesamtzahl der $-CH_2$-Glieder in der Silyl-substituierten Kette zwischen 7 und 12 günstig, wobei die Gesamtlänge von 8 bis 10 $CH_2$-Gruppen bevorzugt ist. Die Kettenglieder G bzw. $G^1$ und $R^7$ enthalten dabei zwischen 2 und 6 $CH_2$-Gruppen, bevorzugt aber 4 bis 5 $-CH_2$-Gruppen. Für die Erniedrigung des Schmelzpunktes sind vor allem die Silylverbindungen der Phenylbenzoate geeignet. Spezielle für ferroelektrische Mischungen bringt die Verwendung von Silylkomponenten neben den günstigen Eigenschaften bezüglich der Löslichkeit (u.a. auch der Dotierstoffe) und der Erniedrigung sowohl der Kristallatisations - als auch der Schmelztemperatur weitere besondere Vorteile.
So konnte beobachtet werden, daß die Verwendung von Silylverbindungen zum Teil zu einer deutlichen Verkürzung der Schaltzeiten führen kann. Ein weiterer Vorteil liegt darin, daß silylsubstituierte Dotierstoffe im Vergleich zu den unsubstituierten Dotierstoffen wesentlich höhere spontane Polarisationen aufweisen.
Außerdem konnte nachgewiesen werden, daß Silylverbindungen im Vergleich zu den entsprechenden Alkylverbindungen eine höheren effektiven Schaltwinkel und damit eine bessere Transmission des Hellzustandes in dem elektrooptischen Schaltelement bewirken.

Bevorzugte Silylkomponenente für die Erhöhung des effektiven Schaltwinkels sind die Phenylbenzoate und die 5-Phenyl-pyrimidin-2-yl-verbindungen.

Eine weitere Lösung der gestellten Aufgabe ist eine Flüssigkristall-Mischung mit einem Gehalt an mindestens einer flüssigkristallinen Verbindung, die als flüssigkristalline Verbindung mindestens eine Verbindung der allgemeinen Formel (I) enthält.

Die Flüssigkristall-Mischungen bestehen aus 2 bis 20, vorzugsweise 2 bis 15 Komponenten, darunter mindestens einer der erfindungsgemäß beanspruchten Verbindungen. Die anderen Bestandteile werden vorzugsweise ausgewählt aus den bekannten Verbindungen mit nematischen, cholesterischen und/oder geneigt-smektischen Phasen, dazu gehören beispielsweise Schiffsche Basen, Biphenyle, Terphenyle Phenylcyclohexane, Cyclohexylbiphenyle, Pyrimidine, Zimtsäureester, Cholesterinester, verschieden überbrückte, terminal-polare mehrkernige Ester von p-Alkylbenzoesäuren. Im allgemeinen liegen die im Handel erhältlichen Flüssigkristall-Mischungen bereits vor der Zugabe der erfindungsgemäßen Verbindung(en) als Gemische verschiedenster Komponenten vor, von denen mindestens eine mesogen ist, d. h. als Verbindung, in derivatisierter Form oder im Gemisch mit bestimmten Cokomponenten eine Flüssigkristall-Phase zeigt [ = mindestens eine enantiotrope (Klärtemperatur > Schmelztemperatur) oder monotrope (Klärtemparatur < Schmelztemperatur) Mesophasenbildung erwarten läßt].

Von der oder den erfindungsgemäßen Verbindung(en) enthalten die Flüssigkristall-Mischungen im allgemeinen 0,01 bis 70 Gew.-%, insbesondere 0,05 bis 50 Gew.-%.

Die erfindungsgemäßen Verbindungen können nach an sich bekannten Standardreaktionen aus mesogenen Grundkörpern wie Phenolen der allgemeinen Formel (II) mit X = OH oder O-Alkali

$$R^1(-A^1)_j(-M^1)_{1\,2}(-A^2)_l(-M^2)_m(-A^3)_n\text{-}X \qquad \text{(II)}$$

und den monofunktionell-reaktionsfähigen Silylalkyl- oder -alkenyl-Verbindungen der allgemeinen Formel (III)

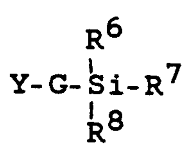

(III)

mit Y = H, OH, Hal, OMes ( = Methylsulfonyloxy, OTos ( = Toluolsulfonyloxy) hergestellt werden, wobei die Synthese dieser Reaktionskomponenten als bekannt vorausgesetzt werden kann.

So können beispielsweise mesogene Hydroxy- oder Mercapto-Verbindungen mit Organosilyl-alkanolen in Anwesenheit von Triphenylphosphin/Azodicarbonsäurediester (Mitsunobu-Reaktion, z. B. in J. Chem. Soc. Perkin Trans. 1975, 461) verknüpft werden. Es können auch die separat oder intermediär erzeugten Alkali- oder Erdalkalisalze dieser mesogenen Hydroxy- oder Mercapto-Verbindungen mit Halogen-, Toluolsulfonyloxy- oder Methylsulfonyloxy-Organosilyl-alkyl-oder alkenyl-Verbindungen umgesetzt werden (Williamson-Reaktion, z. B. in Patai, The Chemistry of the Ether Linkage, Interscience, Publishers, New York 1967, S. 446 - 468).

Es können aber auch mesogene Carbonsäuren X = COOH in Formel (II)] mit Organosilyl-alkanolen unter Kondensationsbedingungen (z. B. in March, Advanced Organic Chemistry, 2nd Ed., Mc. Graw-Hill Kogakuska Ltd., Tokyo 1977, S. 363 - 365) oder unter Bedingungen der Williamson-Reaktion [X = COO-Alkyl in

Formel (II) ] mit Organosilylalkyl-halogeniden oder -sulfonylverbindungen umgesetzt werden. In gleicher Weise ist dies auch mit mesogenen Hydroxy- oder Mercapto-Verbindungen und Organosilyl-alkansäuren möglich.

Die zur Verknüpfung erforderlichen Organosilyl-Verbindungen werden nach an sich bekannten Methoden hergestellt (z. B. C. Eaborn et al. in Organometallic Compounds of the Group IV Elements, Vol. 1, Part 1, Dekker New York-1968; E. Lukevics et al. in J. Organomet. Chem. Libr. 5, 1 (1977) oder R. Heumer et al. in Houben-Weyl Methoden der org. Chemie, E 18/2, S. 685 ff, Thieme-Verlag Stuttgart-New York, 1986).

Sie können beispielsweise hergestellt werden, indem man ungesättigte Verbindungen Z-$C_nH_{2n-1}$ - (Z = Benzyloxy, TBDMS-oxy, Hal) mit Dialkylchlorsilanen $HSiR^7R^8Cl$ in Gegenwart eines Edelmetallkatalysators (z. B. $H_2PtCl_6$ in Isopropanol) und gegebenenfalls in Anwesenheit eines inerten organischen Lösemittels bei Temperaturen zwischen 0° und 150°C umsetzt, wobei das Silan vorteilhaft im Überschuß eingesetzt wird. Daran anschließend wird das entstandene Chlorsilan Z-$C_nH_{2n}$-$SiR^7R^8$-Cl mit einem organometallischen Reagens wie $R^6MgHal$ oder $R^6Li$ in einem geeigneten inerten organischen Lösemittel bei Temperaturen zwischen -78°C und + 100°C behandelt. In einer weiteren Variante können Halogenverbindungen Z-$C_nH_{2n}$-Hal in die Grignardverbindung überführt und mit Chlorsilanen der Formel $ClSiR^6R^7R^8$ umgesetzt werden. Sofern Z einer Benzyloxy- oder TBDMS-oxy-Gruppe entspricht, wird diese Gruppe nach Standardmethoden (z.B. W. Greene, Protective Groups in Organic Synthesis, Wiley-New York, 1981) in eine OH-Gruppe umgewandelt.

Weiterhin können Silane $HSiR^7R^8Cl$ oder $ClSiR^6R^7R^8$ mit Verbindungen des Typs Z-$C_nH_{2n-1}$ bzw. Z-$C_nH_{2n}$-Hal direkt zu den Verbindungen der allgemeinen Formel (I) umgesetzt werden, wenn Z nicht die vorstehen aufgeführte Bedeutung, sondern die von $R^1(-A^1)_j(-M^1)_k(-A^2)_l(-M^2)_m(-A^3)_n$ hat.

Für die gebrauchsfertigen ferroelektrischen Flüssigkristall-Mischungen wurden die Werte für die spontane Polarisation $P_s$ [nC/cm$^2$], die optische Schaltzeit $\tau$ [$\mu$s], und den effektiven Schaltwinkel $\theta_{eff}$ [°] wie folgt bestimmt:

Die $P_s$-Werte werden nach der Methode von H.Diamant et al. (Rev. Sci. Instr., 28, 30, 1957) gemessen, wobei Meßzellen mit 2 $\mu$m Elektrodenabstand und geriebenem Polyimid als Orientierungsschicht verwendet werden.

Zur Bestimmung von $\tau$ und $\theta_{eff}$ wird die Meßzelle auf dem Drehtisch eines Polarisationsmikroskops zwischen gekreuztem Analysator und Polarisator befestigt.

Durch Drehen des Tisches wird die Position des Tisches mit minimalen Lichtdurchgang für die beiden Schaltzustände in der Zelle bestimmt. Die Differenz der beidne Positionen am Drehtisch ist gleich dem doppeltem effektiven Tiltwinkel.

Mit Hilfe einer Photodiode erfolgt die Bestimmung der Schaltzeit $\tau$, indem die Anstiegszeit des Lichtsignals von 10 auf 90 % Signalhöhe gemessen wird. Die Schaltspannung besteht aus Rechteckpulsen und beträgt ± 10 V/$\mu$m.

Die Phasenumwandlungstemperaturen werden bei Aufheizen mit Hilfe eines Polarisationsmikroskops anhand der Texturänderungen bestimmt. Die Bestimmung des Schmelzpunkts wurde hingegen mit einem DSC-Gerät durchgeführt. Die Angabe der Phasenumwandlungstemperaturen zwischen den Phasen

Nematisch (N bzw. N*)
Smektisch-C ($S_c$ bzw. $S_c$*)
Smektisch-A ($S_A$ bzw. $S_A$*)
Kristallin (X bzw. K)

erfolgt in °C und die Werte stehen zwischen den Phasenbezeichnungen in der Phasenfolge.

**Beispiel 1**

4-(Trimethylsilyl)butyl-[4-(5-octyloxypyrimidin-2-yl) phenyl]-ether

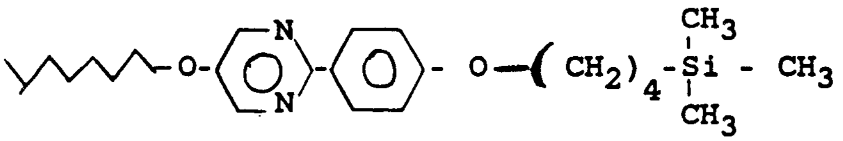

Zur Lösung von 0,46 ml (3 mmol) Diethylazodicarboxylat und 790 mg (3 mmol) Triphenylphosphin in 15 ml trockenem Tetrahydrofuran werden 439 mg (3 mmol) 4-(Trimethylsilyl) butan-1-ol und 901 mg (3 mmol) 4-(5-n-Octyloxypyrimidin-2-yl)-phenol gegeben. Nach einer Reaktionszeit von 15 h wird das Lösemittel

abdestilliert und der Rückstand chromatographisch ($SiO_2/CH_2Cl_2$) gereinigt. Nach Umkristallisation aus n-Hexan werden 790 mg farblose Kristalle erhalten.
Phasenfolge: K 68,5 $S_c$ 77,6 $S_A$ 77,6 - 78,3 I
Die nachfolgenden Synthesen werden nach den Angaben des Beispiels 1 mit entsprechender Mengenanpassung durchgeführt.

**Beispiel 2**

4-(Trimethylsilyl)butyl-[4-(2-octyloxypyrimidin-5-yl) phenyl]-ether

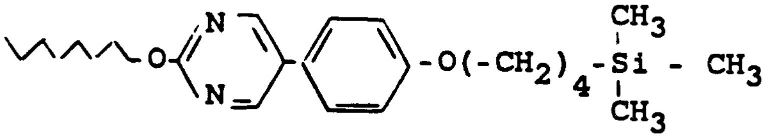

Phasenfolge: K 70,3 I

**Beispiel 3**

4-(Trimethylsilyl)butyl-[4-(2-octylpyrimidin-5-yl) phenyl]-ether

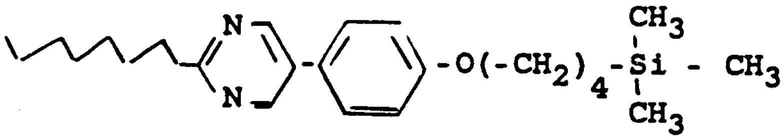

Phasenfolge: K 61,8 I

**Beispiel 4**

4-(Trimethylsilyl)butyl-[4-(5-octylpyrimidin-2-yl) phenyl]-ether

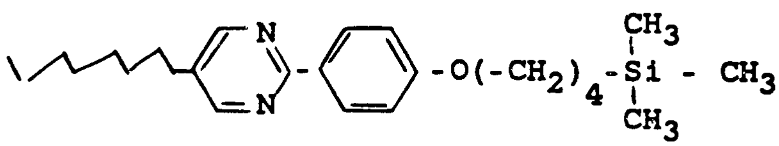

Phasenfolge: K 52,9 $S_c$ (39,7) $S_A$ (43) I

**Beispiel 5**

4-(Ethyldimethylsilyl)butyl-[4-(5-octyloxypyrimidin-2-yl) phenyl]-ether

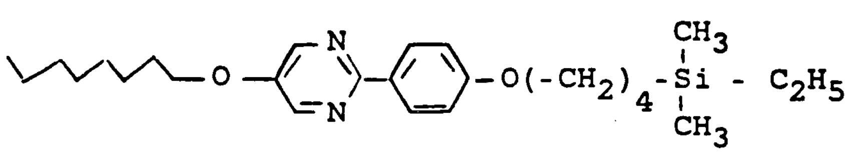

Phasenfolge: K 49,4 $S_c$ 71 $S_A$ 71,3 I

**Beispiel 6**

4-(Ethyldimethylsilyl)butyl-[4-(2-octyloxypyrimidin-5-yl) phenyl]-ether

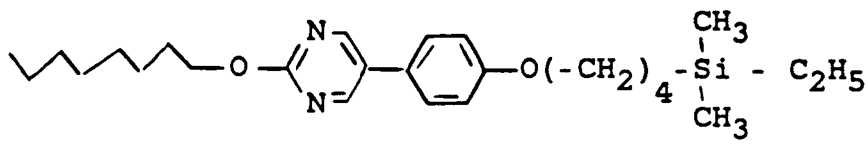

Phasenfolge: K 63,3 I

**Beispiel 7**

4-(Ethyldimethylsilyl)butyl-[4-(2-octylpyrimidin-5-yl) phenyl]-ether

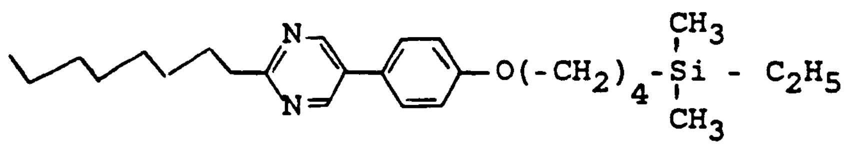

Phasenfolge: K 50,9 I

**Beispiel 8**

4-(Ethyldimethylsilyl)butyl-[4-(5-octylpyrimidin-2-yl) phenyl]-ether

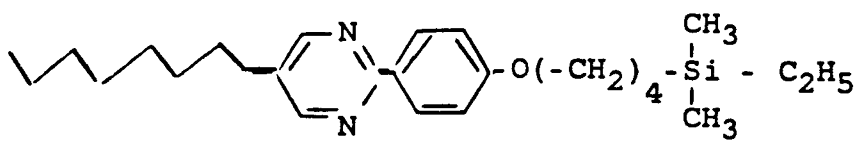

Phasenfolge: K 35,2 $S_c$ (30,6) $S_A$ (32,3) I

**Beispiel 9**

4-(n-Butyldimethylsilyl)butyl-[4-(2-octyloxypyrimidin-5-yl) phenyl]-ether

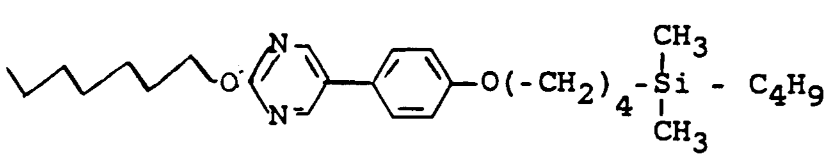

Phasenfolge: K 35,8 I

**Beispiel 10**

4-(n-Butyldimethylsilyl)butyl-[4-(2-octyl-pyrimidin-5-yl) phenyl]-ether

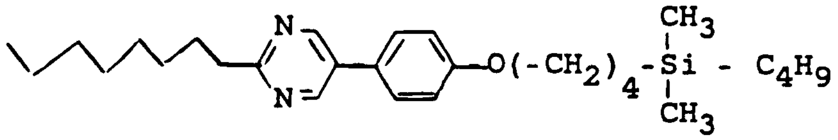

Phasenfolge: K 25,4 I

**Beispiel 11**

4-(n-Butyldimethylsilyl)butyl-[4-(5-octyloxypyrimidin-2-yl) phenyl]-ether

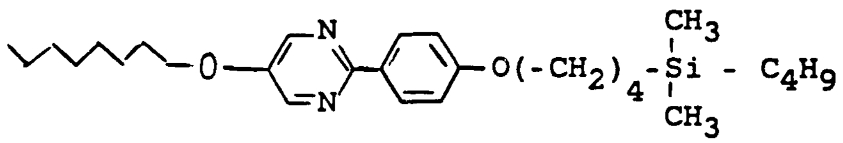

Phasenfolge: K 16,5 $S_c$ 63,1 $S_A$ 64 I
Zum Vergleich bieten sich die beiden unsubstituierten Phenylpyrimidine an
5-Octyloxy-2(4-ocyloxyphenyl)pyrimdin
Phasenfolge: K 50,7 $S_c$ 92 $S_A$ 99 N 100 I
5-Octyloxy-2(4-dexyloxyphenyl)pyrimidin
Phasenfolge: K 50,2 $S_c$ 89 $S_A$ 99 I
Man erkennt, daß die silylsubstituierte Verbindung einen wesentlich niedrigeren Schmelzpunkt und einen breitren $S_c$-Phasenbereich aufweist.

Ein Vergleich mit den Beispielen 39 und 21 zeigt, daß bei konstanter Gesamtkettenlänge die Beispielverbindung 11 bevorzugt ist und besonders niedrige Schmelzpunkte aufweist. Desweiteren zeigt der Vergleich mit den Beispielsverbindungen 1,5 und 42, daß der Schmelzpunkt bei einer Gesamtkettenlänge von 8 -$CH_2$-Kettonglieder besonders günstig ist.

**Beispiel 12**

4-(n-Butyldimethylsilyl)butyl-[4-(5-octylpyrimidin-2-yl) phenyl]-ether

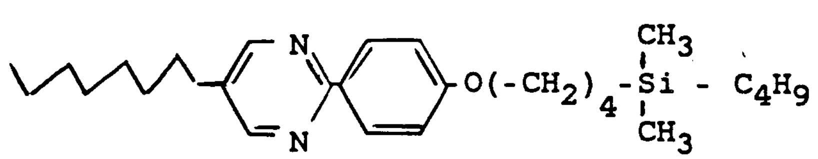

Phasenfolge: K 16,7 $S_c$ 22,3 $S_A$ 25,9 I
Zum Vergleich bietet sich ein 5-octyl-2(4-Octyloxyphenyl)-pyrimidin an, das folgende Phasenfolge aufweist:
K 29 $S_C$ 55 $S_A$ 62 N 69 I
Die erfingunsgemäße Verbindung 12 weist einen niedrigeren Schmelzpunkt auf als das unsubstituierte Phenylpyrimidin. Als Vergleich für Verbindung mit der Dimethylsilylgruppe in einer anderen Position, können die Beispiel 24 und 48 herangezogen werden. Beide Verbindungen haben höhere Schmelzpunkte, sodaß die Verbindung 12 bevorzugt wird.

**Beispiel 13**

4-(n-Butyldimethylsilyl)butyl-[4-(4-decyloxybenzoyloxy) phenyl]-ether

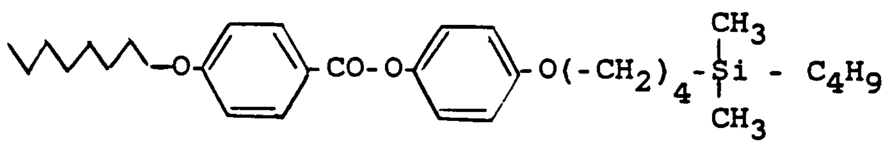

Phasenfolge: K 18,7 $S_3$(6,5) $S_c$ 43,8 $S_A$ 47,2 I
Für einen Vergleich bietet sich ein 4′-Nonyloxyphenyl-4-dexyloxy-benzoesäureester mit den folgenden Phasbenbereichen an:
K 75 $S_c$ 87 $S_A$ 89 N 91 I
Die erfindungsgemäße Verbindung weist im Vergleich dazu einen wesentlich niedrigeren Schmelzpuntk auf. Der Vergleich mit der Verbindung aus Beispiel 26 zeigt außerdem, daß die hier verwendete Position der Dimethylsilylgruppe bei gleicher Kettenlänge bezüglich des Schmelzpunktes besonders geeignet ist.

**Beispiel 14**

4-(n-Butyldimethylsilyl)butyl-[2-(4-octyloxyphenyl)pyrimidin-5-yl]-ether

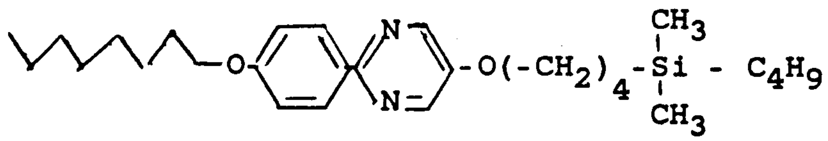

Phasenfolge: K 36,4 $S_A$ (30,6) N (30,7) I

**Beispiel 15**

6-(Trimethylsilyl)hexyl-[4-(2-octyloxypyrimidin-5-yl) phenyl]-ether

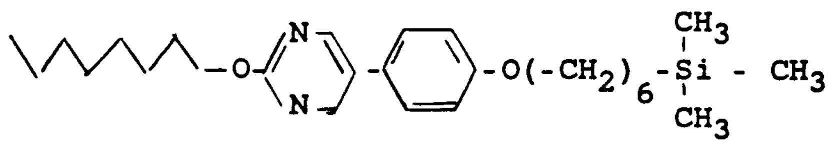

Phasenfolge: K 68,1 $S_c$ 70,6 I

**Beispiel 16**

6-(Trimethylsilyl)hexyl-[4-(2-octylpyrimidin-5-yl) phenyl]-ether

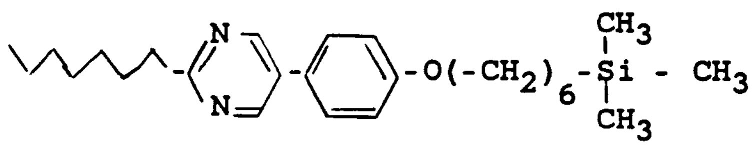

Phasenfolge: K 47,6 $S_c$ 52 $S_A$ 56,3 I

**Beispiel 17**

6-(Trimethylsilyl)hexyl-[4-(5-octylpyrimidin-2-yl)phenyl]-ether

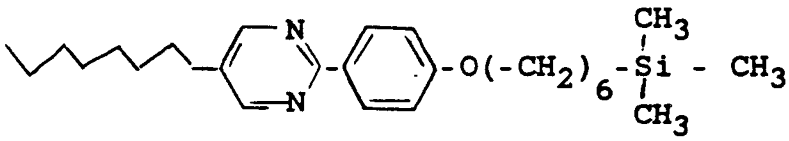

Phasenfolge: K 25 $S_c$ 47 $S_A$ 56,6 I
Im Vergleich zu der unsubstituierten Verbindung 5-Octyl-2(4-(Octyloxyphenyl)-pyrimidin mit den Phasenbereichen
K 29 $S_c$ 55 $S_A$ 62 N 69 I
weist die erfindungsgemäße Komponente einen um 4 °C niedrigeren Schmelzpunkt auf.
Der Vergleich mit den Beispielen 4, 49, 52 und 37 zeigt, daß eine Verlängerung und eine Verkürzung des Spacers zu einer Erhöhung der Schmelztemperatur führt und daß eine Gesamtlänge von 7 -$CH_2$-Einheiten besonders günstig ist.

**Beispiel 18**

6-(Trimethylsilyl)hexyl-[2-(4-octyloxyphenyl)pyrimidin-5-yl]-ether

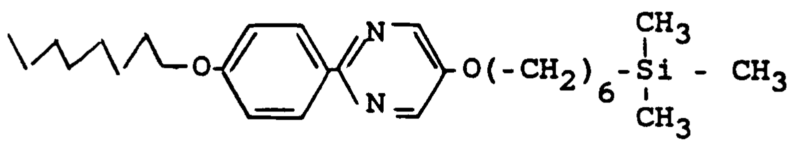

Phasenfolge: K 38,7 $S_c$ 64,5 I

**Beispiel 19**

6-(Trimethylsilyl)hexyl-[4-(2-octylthiopyrimidin-5-yl) phenyl]-ether

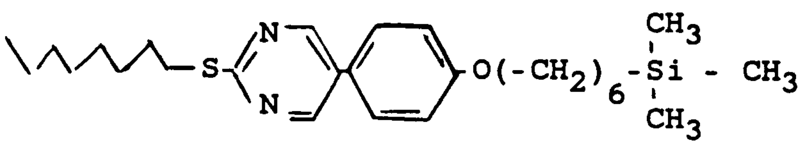

Phasenfolge: K 46,3 $S_c$ (42,2) $S_A$ (43,1) I

**Beispiel 20**

6-(Trimethylsilyl)hexyl-[4-(5-octylpyridin-2-yl)phenyl]-ether

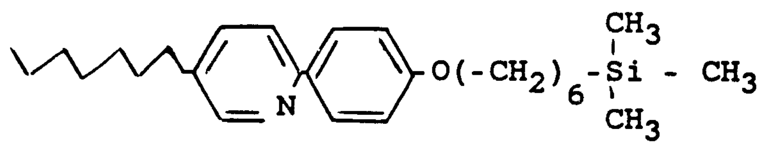

Phasenfolge: K 28,3 $S_2$ 37,8 $S_c$ 60,2 I

**Beispiel 21**

6-(Ethyldimethylsilyl)hexyl-[4-(5-octyloxypyrimidin-2-yl) phenyl]-ether

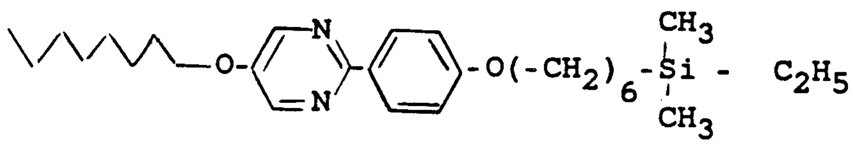

Phasenfolge: K 38,6 $S_c$ 78 $S_A$ 84 I

**Beispiel 22**

6-(Ethyldimethylsilyl)hexyl-[4-(2-octyloxypyrimidin-5-yl) phenyl]-ether

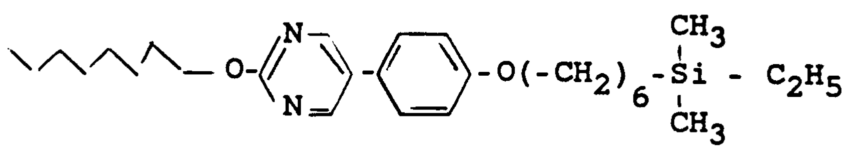

Phasenfolge: K 58,6 $S_c$ 62,5 I

**Beispiel 23**

6-(Ethyldimethylsilyl)hexyl-[4-(2-octylpyrimidin-5-yl)phenyl]-ether

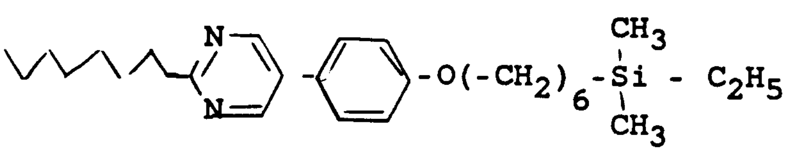

Phasenfolge: K 39,8 $S_c$ 42,7 $S_A$ 47,6 I

**Beispiel 24**

6-(Ethyldimethylsilyl)hexyl-[4-(5-octylpyrimidin-2-yl) phenyl]-ether

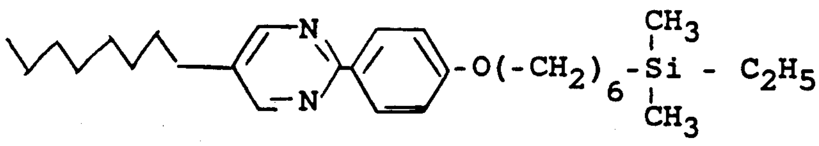

Phasenfolge: K 22,6 $S_c$ 41,6 $S_A$ 50,4 I
Im Vergleich zu den unsubstituierten 5-Octyl-2(4′-octyloxyphenyl)pyrimdin mit der Phasenfolge
K 29 $S_c$ 55 $S_A$ 62 N 69 I
weist die erfindungsgemäße Mischung einen um 6 ° C niedrigeren Schmelzpunkt auf.

Der Vergleich mit den Beispielsverbindungen 8, 50, 53 und 33 zeigt, daß der Schmelzpunkt sowohl mit längeren als auch mit kürzerem Spacer ansteigt und offensichtlich bei einer Gesamtlänge von 8 $-CH_2-$ Einheiten ein Minimum aufweist.

**Beispiel 25**

6-(Ethyldimethylsilyl)hexyl-[2-(4-octyloxyphenyl)pyrimidin-5-yl]-ether

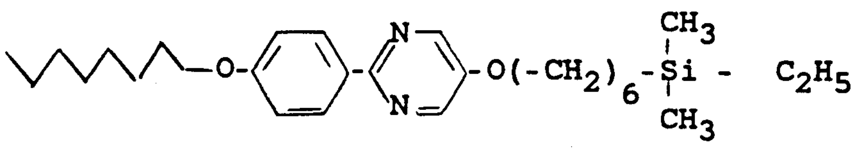

Phasenfolge: K 28,7 $S_c$ 56 I

**Beispiel 26**

6-(Ethyldimethylsilyl)hexyl-[4-(4-decyloxybenzoyloxy) phenyl]-ether

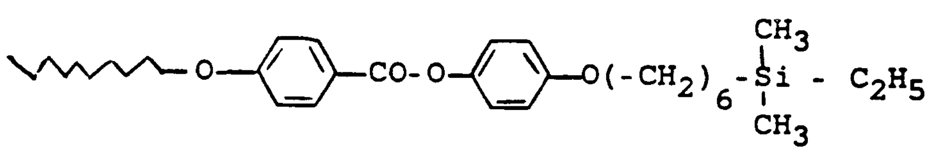

Phasenfolge: K 55,2 $S_x$ (34,6) $S_c$ 67,4 $S_A$ 68,5 I

**Beispiel 27**

11-(Trimethylsilyl)undecyl-[4-(4-octyloxybenzoyloxy)phenyl] -ether

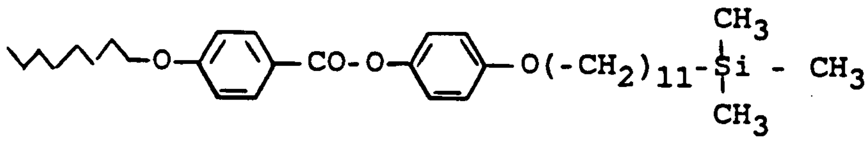

Phasenfolge: K 53,5 $S_c$ 78,3 $S_A$ 81,2 I

**Beispiel 28**

11-(Trimethylsilyl)undecyl-[4-(2-octylthiopyrimidin-5-yl) phenyl]-ether

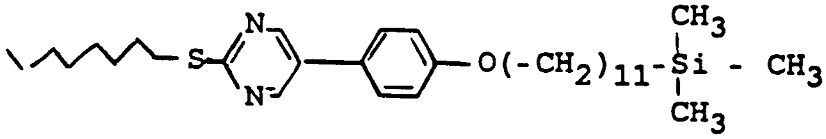

Phasenfolge: K 68,5 $S_2$ (47,2) $S_c$ 68,6 I

**Beispiel 29**

11-(Trimethylsilyl)undecyl-[2-(4-octyloxyphenyl)-pyrimidin-5-yl]-ether

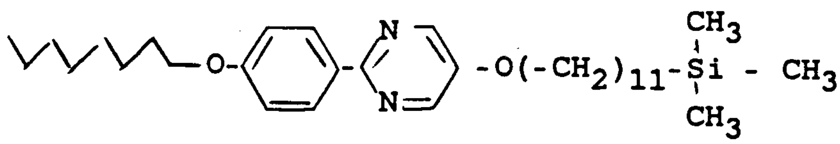

Phasenfolge: K 69,4 $S_c$ 92,0 I

**Beispiel 30**

11-(Trimethylsilyl)undecyl-[4-(5-octylpyridin-2-yl)phenyl]-ether

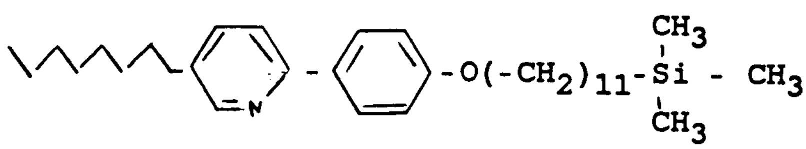

Phasenfolge: K 48,3 $S_2$ 60 $S_c$ 76,1 I

**Beispiel 31**

11-(Trimethylsilyl)undecyl-[2-(4-dodecyloxyphenyl)pyrimidin-5-yl]-ether

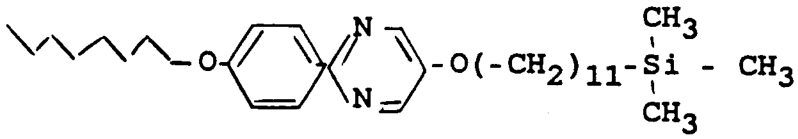

Phasenfolge: K 81,6 $S_c$ 89,9 I

**Beispiel 32**

11-(Ethyldimethylsilyl)undecyl-[4-(2-octylthiopyrimidin-5-yl) phenyl]-ether

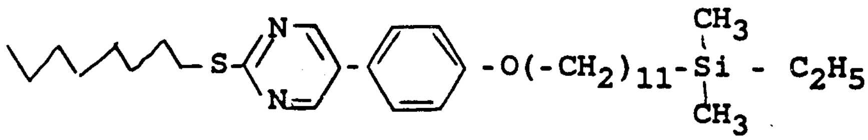

Phasenfolge: K 64 $SA_2$ [40] $S_c$ [63] I

**Beispiel 33**

11-(Ethyldimethylsilyl)undecyl-[4-(5-octylpyrimidin-2-yl)phenyl]-ether

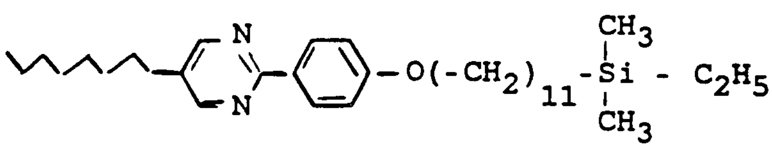

Phasenfolge: K 45,7 $S_c$ 58,6 $S_A$ 58,9 I

**Beispiel 34**

11-(Ethyldimethylsilyl)undecyl-[4-(4-octyloxybenzoyloxy) phenyl]-ether

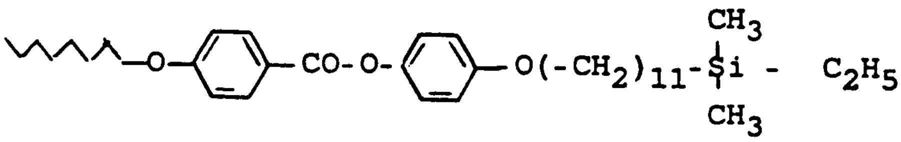

Phasenfolge: K 57 $S_c$ 74,8 $S_A$ 77,5 I

**Beispiel 35**

11-(Ethyldimethylsilyl)undecyl-[4-(5-octylpyridin-2-yl) phenyl]-ether

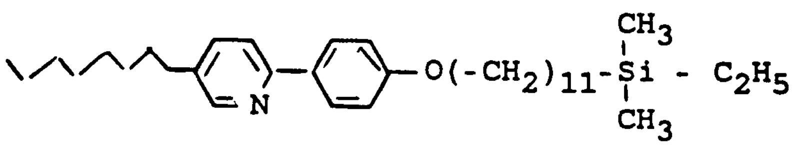

Phasenfolge: K 41 $S_2$ 57 $S_c$ 71 I

**Beispiel 36**

11-(Ethyldimethylsilyl)undecyl-[2-(4-dodecyloxyphenyl) pyrimidin-5-yl]-ether

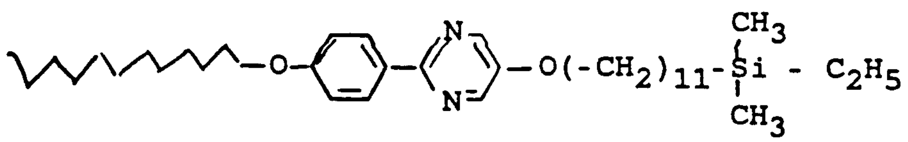

Phasenfolge: K 75,4 $S_c$ 84,9 I

**Beispiel 37**

11-(Trimethylsilyl)undecyl-[4-(5-octylpyrimidin-2-yl) phenyl]-ether

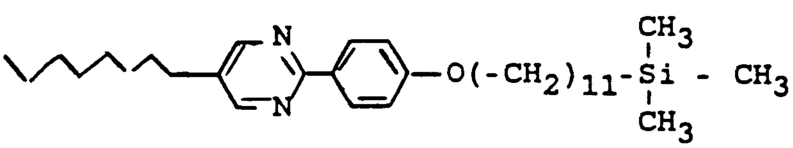

2 g (4,6 mmol) 10-Undecenyl-[4-(5-octylpyrimidin-2-yl) phenyl]-ether, 6 g (63,4 mmol) Chlordimethylsilan und 0,1 ml einer 0,1 molaren Lösung von $H_2PtCl_6$ in Isopropanol werden währen 8 h im geschlossenen Glasrohr auf 100 °C erhitzt. Nach Öffnung des Rohres wird eingeengt, in 10 ml trockenem Tetrahydrofuran aufgenommen und mit 50 ml einer 1 molaren Lösung von Methylmagnesiumbromid in Tetrahydrofuran versetzt. Nach 2stündigem Erhitzen am Rückfluß wird das Gemenge in einer gesättigten wäßrigen $NH_4Cl$-Lösung hydrolysiert und die wäßrige Lösung mit Diethylether mehrfach extrahiert. Die vereinigten organischen Phasen werden mit gesättigter NaCl-Lösung gewaschen, über $MgSO_4$ getrocknet und im Vakuum eingeengt. Nach chromatographischer Reinigung ($SiO_2$, $CH_2Cl_2$/Hexan 3/1) und Umkristallisieren aus Methanol erhält man 700 mg farbloser Kristalle.

Phasenfolge: K 56,7 $S_c$ 63,8 I

**Beispiel 38**

3-(Butyldimethylsilyl)propyl-[4-(5-octyloxypyrimidin-2-yl)-phenyl]-ether

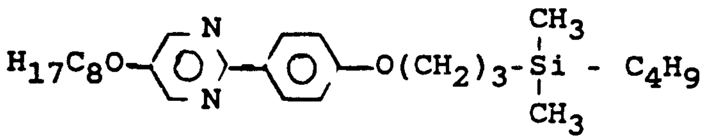

0,3 g (10 mmol) 80 proz. Natriumhydrid in 2 ml Dimethylformamid (DMF) werden nacheinander tropfenweise versetzt mit 1,42 g (5 mmol) 2-(4-Hydroxyphenyl)-5-octyloxypyrimidin in 10 ml DMF sowie mit 3-Butyldimethylsilyl-1-brompropan in 5 ml DMF und 2 Stunden bis 60 °C gerührt. Nach Hydrolyse mit 0,5 ml Methanol wird die Reaktionslösung in 40 ml eiskaltem Wasser aufgenommen, mit 1N HCl auf pH 6-7 gestellt und mit Dichlormethan extrahiert. Die organische Phase wird mit Kochsalzlösung gewaschen, über Magnesiumsulfat getrocknet und im Vakuum eingeengt. Nach chromatographischer Reinigung ($SiO_2$, Hexan (Dichlormethan 1:1) und Umkristallisieren aus Isopropanol erhält man 1,28 g farbloser Kristalle
$K_2$ 34(23) K50 $S_c$ 65 $S_A$ 68 I
Analog wurden erhalten:

**Beispiel 39**

3-(Pentyldimethylsilyl)propyl-[4-(5-octyloxypyrimidin-2-yl) phenyl]-ether

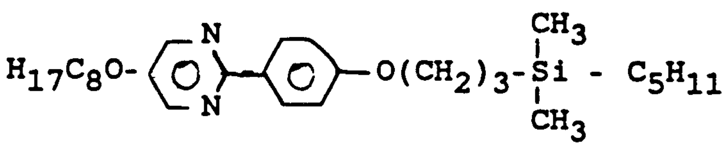

$K_2$ 36(16) K55 $S_c$ 60 $S_A$ 64 I

**Beispiel 40**

5-(Trimethylsilyl)pentyl-[4-(5-octyloxypyrimidin-2-yl) phenyl]-ether

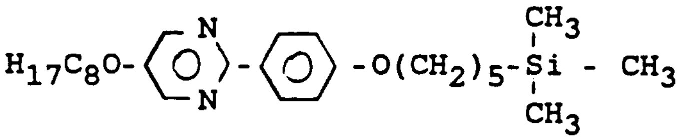

K 68,6 $S_c$ 88,2 $S_A$93,3 I

**Beispiel 41**

5-(Ethyldimethylsilyl)pentyl-[4-(5-octyloxypyrimidin-2-yl) phenyl]-ether

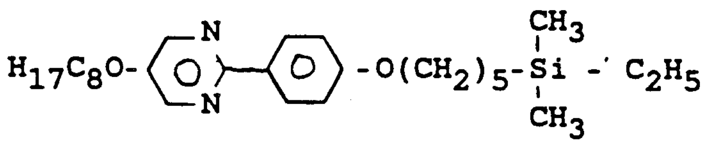

K 66,1 $S_c$ 83 $S_A$ 87,2 I

**Beispiel 42**

5-(Butyldimethylsilyl)pentyl-[4-(5-octyloxypyrimidin-2-yl) phenyl]-ether

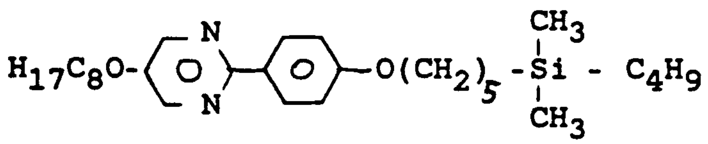

$K_2$ 25,3 $K_1$ 37,7 $S_c$ 75 $S_A$ 81 I

**Beispiel 43**

6-(Trimethylsilyl)hexyl)-[4-(5-octyloxypyrimidin-2-yl)phenyl]-ether

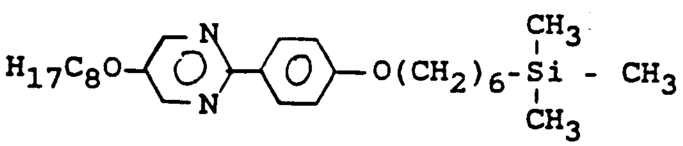

**Beispiel 44**

6-(Ethyldimethylsilyl)hexyl-[4-(5-heptyloxypyrimidin-2-yl) phenyl]-ether

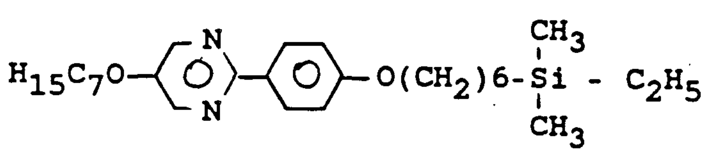

$K_2$ [21,6] K 36,2 $S_c$ 71 $S_A$ 81 I

**Beispiel 45**

10-(Trimethylsilyl)decyl-[4-(5-octyloxypyrimidin-2-yl) phenyl]-ether

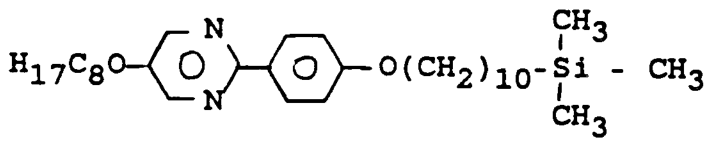

$K_2$ 18,9 $K_1$ 40 $S_c$ 84 $S_A$ 92 I

**Beispiel 46**

10-(Ethyldimethylsilyl)decyl-[4-(5-octyloxypyrimidin-2-yl) phenyl]-ether

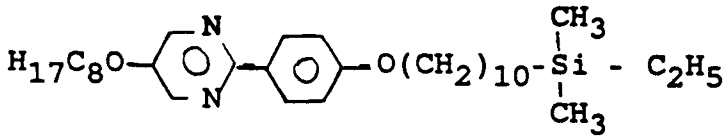

K 13,1 $S_c$ 79 $S_A$ 88 I

**Beispiel 47**

3-(Butyldimethylsilyl)propyl-[4-(5-octylpyrimidin-2-yl) phenyl]-ether

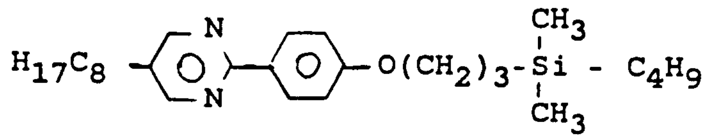

K 31,4 $S_A$ 39,2 I

**Beispiel 48**

3-(Pentyldimethylsilyl)propyl-[4-(5-octylpyrimidin-2-yl) phenyl]-ether

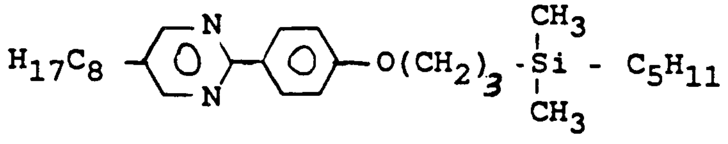

[$K_2$ 27,9] $K_1$ 32,2 [$S_c$ 11] $S_A$ 34,5 I

**Beispiel 49**

5-(Trimethylsilyl)pentyl-[4-(5-octylpyrimidin-2-yl)phenyl]-ether

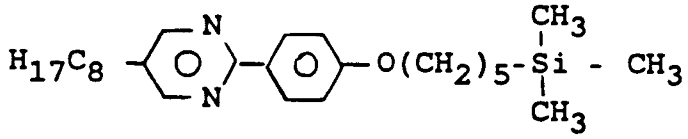

K 50,6 [$S_c$ 42] $S_A$ 60 I

**Beispiel 50**

5-(Ethyldimethylsilyl)pentyl-[4-(5-octylpyrimidin-2-yl) phenyl]-ether

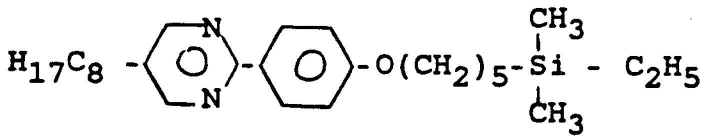

K 48,4 $S_A$ 54 I

**Beispiel 51**

5-(Butyldimethylsilyl)pentyl-[4-(5-octylpyrimidin-2-yl) phenyl]-ether

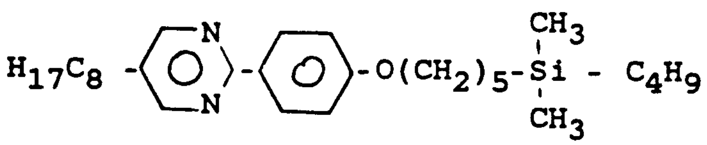

$K_2$ 16,2 $S_A$ 47,5 I

**Beispiel 52**

10-(Trimethylsilyl)decyl-[4-(5-octylpyrimidin-2-yl) phenyl]-ether

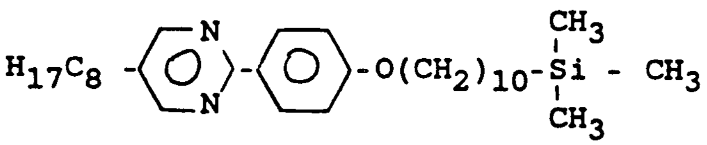

K 50,1 $S_c$ 60,7 $S_A$ 61 I

**Beispiel 53**

10-(Ethyldimethylsilyl)decyl-[4-(5-octylpyrimidin-2-yl) phenyl]-ether

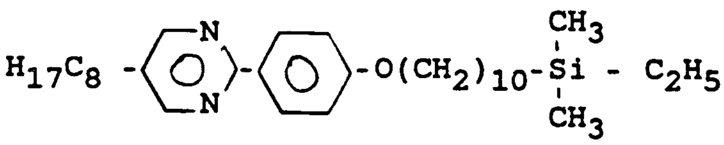

K 42,6 $S_c$ 56,4 $S_A$ 56,5 I

**Beispiel 54**

6-(Trimethylsilyl)hexyl-[4-(5-dodecylpyrimidin-2-yl)phenyl]-ether

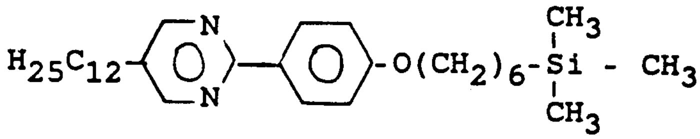

[$K_2$ 32,2] K 46,3 [$S_2$ 12] $S_c$ 60 I

**Beispiel 55**

4-(Cyclohexyldimethylsilyl)butyl-[4-(5-octylpyrimidin-2-yl) phenyl]-ether

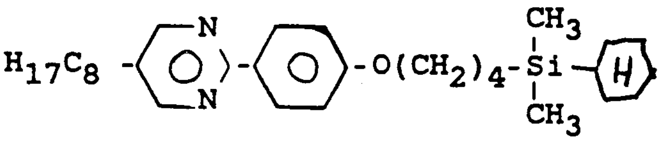

X 45 $S_c$ (10) $S_A$ (17) I

**Beispiel 56**

6-(Ethyldimethylsilyl)hexyl-[2-(4-(4-butyloxy)butyloxyphenyl) pyrimidin-5-yl]-ether

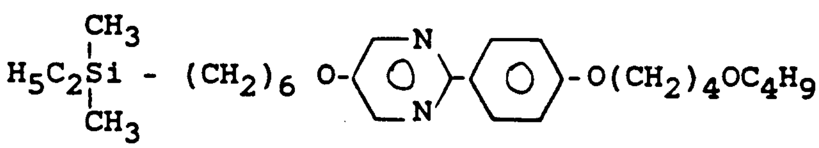

K 42,2 [$S_C$ 41,8] I

**Beispiel 57**

4-trans-Pentylcyclohexancarbonsäure-[4-(5-(4-butyldimethylsilyl)-butoxypyrimidin-2-yl)phenyl]-ester

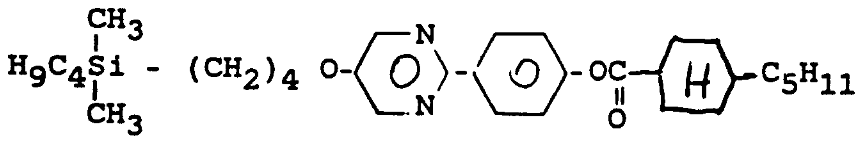

K 82 $S_A$ 80 N 123,5 I

**Beispiel 58**

4-(Butyldimethylsilyl)butyl-[2-(6-cyclopropylhexyloxyphenyl) pyrimidin-5-yl]-ether

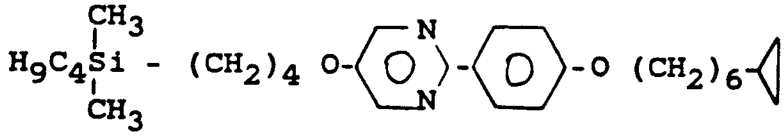

Fp 42-43

**Beispiel 59**

4-(Butyldimethylsilyl)butyl-[2-(4-(4-nonyloxybenzyloxy) phenyl)pyrimidin-5-yl]-ether

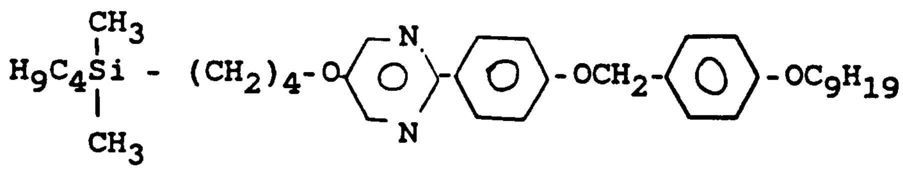

X 62 $S_c$ 98 I

**Beispiel 60**

(2R,3R)-3-Propyloxiran-2-carbonsäure-[4-(5-(4-butyldimethylsilyl-butyloxy)pyrimidin-2-yl)phenyl]-ester

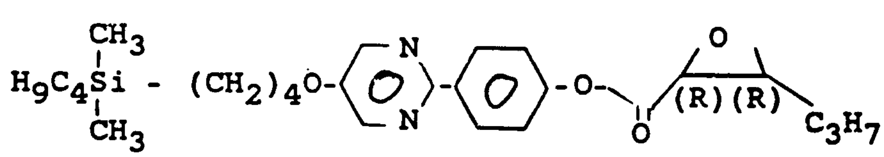

$(\alpha)_D$ = -9,08 ° (C=2, $CHCl_3$)

**Beispiel 61**

Nonansäure-[4-(5-(5-ethyldimethylsilyl-pentyloxy)pyrimidin-2-yl)phenyl]-ester

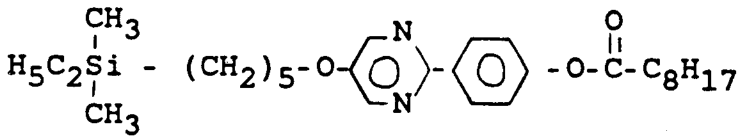

X 65 I

**Beispiel 62**

(2S,3S)-3-Butyloxiran-2-methyl-[4-(5-(4-butyldimethylsilyl-butyloxy)pyrimidin-2-yl)phenyl]-ether

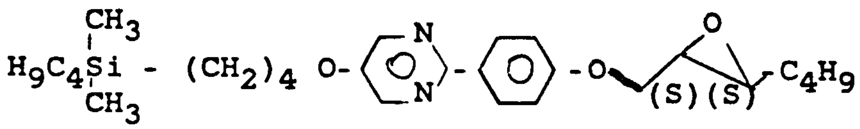

X 79 I
(α) = -13,2 ° (c = 2, $CHCl_3$)

**Beispiel 63**

(2S,3S)-3-Butyloxiran-2-methyl[2-(4-(4-butyldimethylsilylbutyloxy)phenyl)pyrimidin-5-yl]-ether

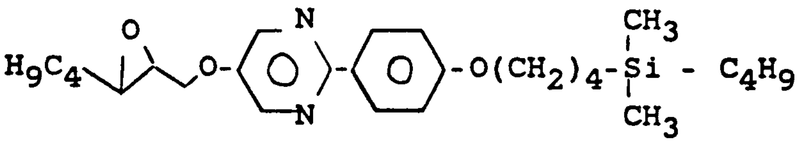

X 50 $S_c$ 80,5 $S_A$ 87 I
(α) = -15,6 ° (c = 2, $CHCl_3$)

**Beispiel 64**

2,3-Difluor-4-(3-butyldimethylsilylpropyloxy)benzoesäure-[4-(5-octylpyrimidin-2-yl)-phenyl]-ester

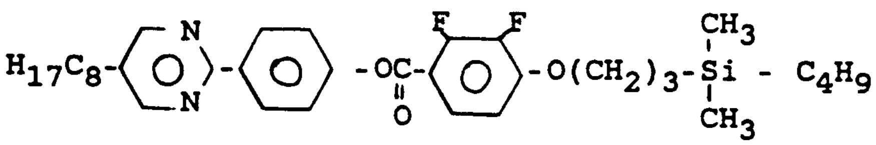

X 59 $S_c$ 99I

**Beispiel 65**

2,3-Difluor-4-(3-butyldimethylsilyl-propyloxy)benzoesäure-[4-(2-octyloxypyrimidin-5-yl)phenyl]-ester

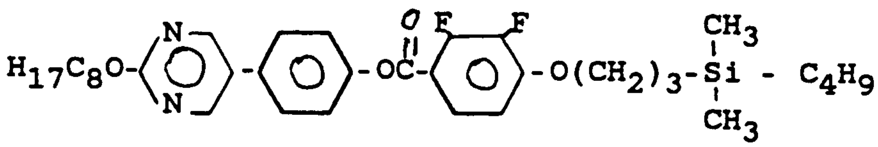

X 66 $S_c$ 128 I

**Beispiel 66**

2,3-Difluor-4-(3-butyldimethylsilyl-propyloxy)benzoesäure-[4-(5 octyloxypyrimidin-2-yl)phenyl]-ester

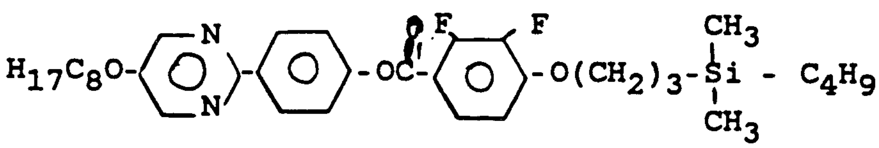

X 67 $S_x$ 111 $S_c$ 125 I

**Beispiel 67**

4-(Butyldimethylsilyl)butyl-[4-(2-nonyloxypyrimidin-5-yl) phenyl]-ether

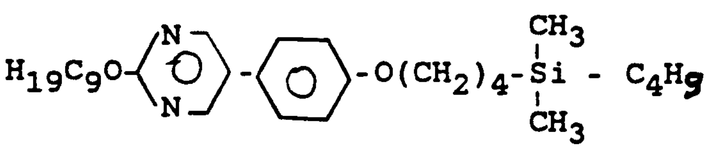

X 33 $S_c$ (27) I

**Beispiel 68**

4-(Butyldimethylsilyl)butyl-[4-(2-decyloxypyrimidin-5-yl) phenyl]-ether

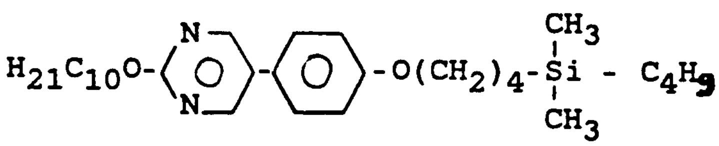

X 40,2 $S_c$ (30) I

**Beispiel 69**

4-(Cyclohexyldimethylsilyl)butyl-[4-(2-octyloxypyrimidin-5-yl)phenyl]-ether

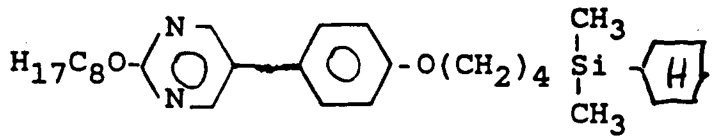

X 52 I

**Beispiel 70**

4-(Butyldimethylsilyl)butyl-[4-(2-hexyloxypyrimidin-5-yl) phenyl]-ether

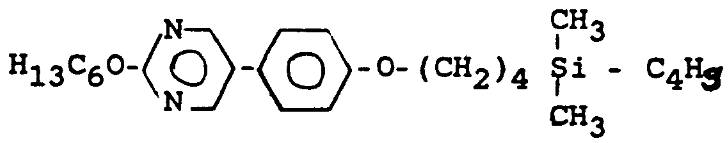

X 47 I

**Beispiel 71**

4-(Butyldimethylsilyl)butyl-[4-(2-heptyloxypyrimidin-5-yl) phenyl]-ether

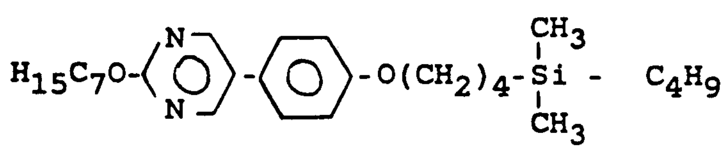

X 44,6 I

**Beispiel 72**

4-(Butyldimethylsilyl)butyl-[4-(2-perfluorheptylmethyloxypyrimidin-5-yl)-phenyl]-ether

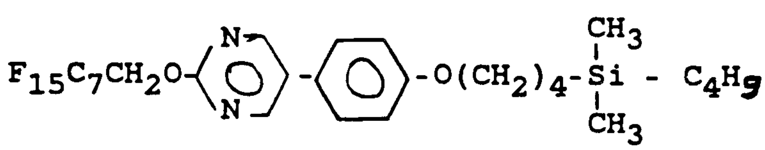

X 37 $S_c$ (18) $S_A$ 35 I

**Beispiel 73**

4-(Butyldimethylsilyl)butyl-[4-(2-(11-undecenyloxy) pyrimidin-5-yl)phenyl]-ether

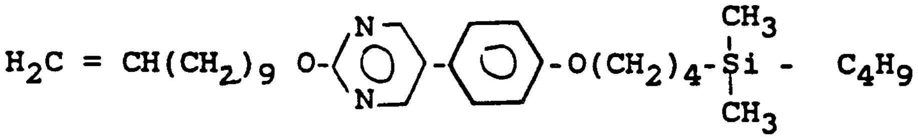

X 38 I

**Beispiel 74**

4-(Butyldimethylsilyl)butyl-[4-(5-(4-hexyloxyphenyl) pyrimidin-2-yl)phenyl]-ether

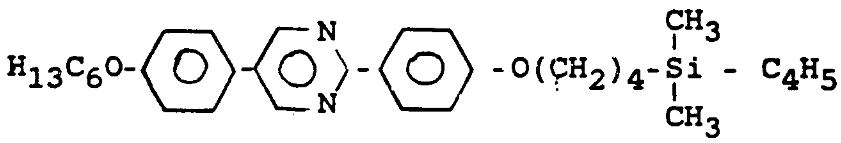

X 57 $S_G$ 53 $S_F$ 88 $S_C$ 157 $S_A$ 172 I

**Beispiel 75**

4-(Butyldimethylsilyl)butyl-[4-(5-(4-decylphenyl)-1,3,4-thiadiazol-2-yl)phenyl]-ether

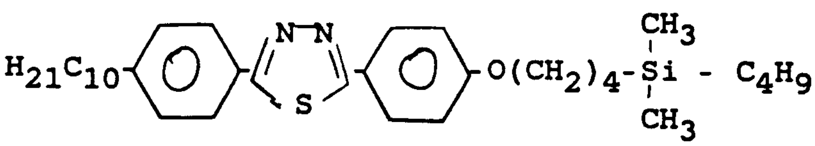

Phasenfolge: X 44 $S_C$ 116 I

**Beispiel 76**

Pyrimidin-2-yl-phenyl-4,5-bis[4-(butyldimethylsilyl)butyl]-ether

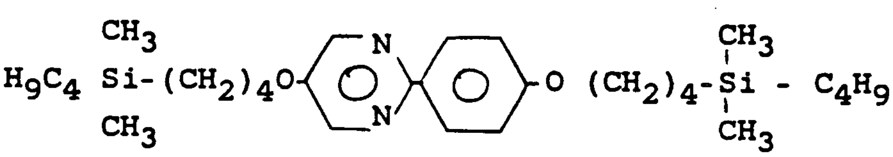

X 24 I

**Beispiel 77**

(2R)-Tetrahydrofuran-2-carbonsäure-[4-(5-(4-butyldimethylsilyl)butoxypyrimidin-2-yl)phenyl]-ester

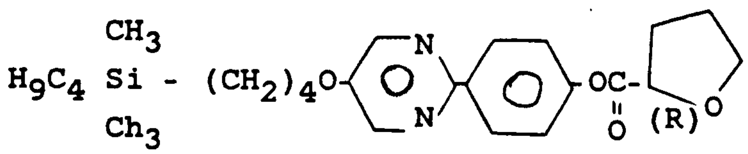

(α) = -7,65 ° (c = 2, $CHCl_3$)

**Beispiel 78**

4-Octyloxybenzoesäure-[4′-(5″-butyldimethylsilyl-butyloxypyrimidin-2″-yl)phenyl]-ester

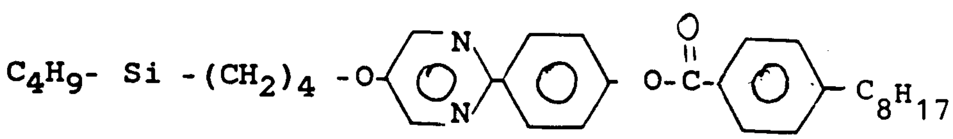

X 43 $S_c$ 89 N 126 I

**Beispiel 79**

(2R)-[2(4-Butyldimethylsilyl-butyloxyphenyl)pyrimidin-5-yl]-milchsäureethylester

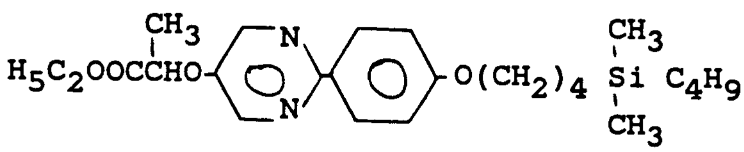

Fp = 57,6 ° C $(\alpha)_D$ = +36,6 °C

**Anwendungsbeispiel 1**

Eine binäre Mischung aus einer Alkyl- und einer Silylverbindung
5-Octyloxy-2-(4-pentyloxyphenyl)-pyrimidin (56 mol-%) 4-(Ethyldimethylsilyl)butyl-[4-(5-octyloxypyrimidin-2-yl)phenyl]-ether (44 mol-%) weist die Phasenfolge
K 16 $S_C$ 76,8 $S_A$ 84,4 I auf.
Diese Mischung weist im Vergleich zur analogen Alkylmischung
5-Octyloxy-2(4-pentyloxyphenyl)-pyrimidin (52 mol-%)
5-Octyloxy-2(4-octyloxyphenyl)-pyrimidin (48 mol-%)
K 25 $S_C$ 85 $S_A$ 95 H 97 I einen niedrigeren Schmelzpunkt auf.

**Anwendungsbeispiel 2**

Eine binäre Mischung aus zwei Silylverbindungen (gleiche mol-%)
4-(Butyldimethylsilyl)-butyl-[4-(4-decyloxybenzoyloxy)-phenyl]-ether und 6-(Trimethylsilyl)hexyl-[2-(4-octyloxyphenyl) pyrimidin-5-yl]-ether weist die Phasenfolge
K 9 $S_C$ 47 $S_A$ 50 I auf.

**Anwendungsbeispiel 3**

Die binäre Mischung aus zwei Silylverbindungen
6-(Ethyldimethylsilyl)-hexyl-[2-(4-octyloxyphenyl)pyrimidin-5-yl]-ether (45 mol-%)
4-(Ethyldimethylsilyl)-butyl-[4-(5-octyloxypyrimidin-2-yl)phenyl]-ether (55 mol-%) weist die Phasenfolge K 12,5 $S_C$ 63 I auf.

**Anwendungsbeispiel 4**

Eine Mischung aus
6-(Ethyldimethylsilyl)-hexyl[4-(5-octyloxypyrimidin-2-yl)-phenyl]-ether (47 mol-%)
trans-4-Pentylcyclohexancarbonsäure[4-(5-dodecyloxy-pyrimidin-2-yl)]-phenylester (18 mol-%)
trans-4-Pentylcyclohexancarbonsäure[4-(5-octyloxy-pyrimidin-2-yl)]-phenylester (22 mol-%)
5-Octyloxy-2(4-ethyloxy-phenyl)-pyrimidin (13 mol-%) weist die Phasenfolge K 17 $S_C$ 91 $S_A$ 101 N 115 I auf.

**Anwendungsbeispiel 5**

Eine ferroelektrische Multikomponentenmischung, die 7,5 mol-% 4-(Ethyldimethylsilyl)-butyl-[4-(5-octyloxypyrimidin-2-yl)phenyl]-ether und 17,5 mol-% 4-(Butyldimethylsilyl)butyl-[4-(5-octyloxypyrimidin-2-yl) phenyl]-ether in "Felix-001"*)(75 mol-%) enthält, weist folgende Phasenfolge auf
K -5 $S_C^*$ 71 $S_A^*$ 84 N* 88 I.

Die Mischung ist nach konventionellen Methoden gut orientierbar.
Im Vergleich zu "Felix 001" weist diese Mischung z.B. bei 25 °C trotz niedrigerer Spontanpolarisation ($P_s$ = 4,5 nC/cm$^2$), eine kürzere Schaltzeit ($\tau_{0-90}$ = 135 µs) ($\tau_{10-90}$ = 75 µs), eine niedrigere Viskosität, einen höheren effektiven Tiltwinkel ($2\theta_{eff}$ = 19°) und damit einen sehr guten Kontrast auf.

**Anwendungsbeispiel 6**

Die Verbindung
4-(Butyldimethylsilyl-butyl-[4-(5-octyloxypyrimidin-2-yl)phenyl]ether weist die Phasenfolge
K 16,5 $S_C$ 63,1 $S_A$ 64 I auf und weist damit im Vergleich zu
5-Octyloxy-2-(4-decyloxyphenyl)-pyrimidin mit der Phasenfolge
K 50 $S_C$ 89 $S_A$ 99
einen wesentlich niedrigeren Schmelzpunkt und damit einen breiteren $S_C$-Phasenbereich auf.

**Anwendungsbeispiel 7**

a) Eine Mischung aus den 6 Komponenten

| | |
|---|---|
| 5-Octyloxy-2-(4-hexyloxy-phenyl)-pyrimidin | 16,7 Mol-% |
| 5-Octyloxy-2-(4-octyloxy-phenyl)-pyrimidin | 7,7 Mol-% |
| 5-Octyloxy-2-(4-butyloxy-phenyl)-pyrimidin | 17,6 Mol-% |
| 5-Octyloxy-2-(4-decyloxy-phenyl)-pyrimidin | 14 Mol-% |
| 5-Octyl-2-(4-(-9-cyclopropyl-nonyloxy)phenyl)-pyrimidin | 24 Mol-% |
| 5-Octyloxy-2-(4-(Butyl-dimethylsilyl-butyloxy-phenyl)-pyrimidin | 20 Mol-% |

zeigt folgende flüssigkristalline Phasenbereiche:
X 2,6 $S_c$ 59 $S_A$ 82 I

b) Im Vergleich dazu weist die flüssigkristalline Mischung, die sich von der obengenannten Mischung nur dadurch unterscheidet, daß sie keine Silylkomponente enthält, folgende Phasenbereiche auf
X 5,1 $S_C$ 68 $S_A$ 83 N 85 I

*) - C. Escher, H.-R. Dübal, W. Hemmerling, I. Müller, D. Ohlendorf und R. Wingen, vorgetragen auf 1st International Symposium on Ferroelectric Liquid Crystals, Arcachon-Bordeaux-France, 21-23. Sept. 1987, handelsübliche Mischung der Hoechst Aktiengesellschaft -

Die Zugabe der Silylkomponente führt also offensichtlich zu einer Erniedrigung des Schmelzpunktes um 2,5 °C.

c) Für einen Vergleich bietet sich auch die folgende Mischung an, die sich von der der Mischung 7a nur dadurch unterscheidet, daß sie anstelle der oben genannten Silylverbindung 20 Mol-%

| | |
|---|---|
| 5-Octyloxy-2-(4-(ethyl-dimethylsilyl-butyloxy)-phenyl)-pyrimdin | 20 Mol-% |

enthält und folgende flüssigkristalline Phasenbereiche aufweist.

X 7,4 $S_c$ 49,5 $S_A$ 87 I

Dieses Beispiel zeigt, daß die in Beispiel 7a gewählte Komponente wesentlich günstiger ist, d.h. Kettenlänge und Stellung der Dimethylsilylgruppe haben einen entscheidenden Einfluß.

Offensichtlich ist die Butyl-dimethyl-silylkomponente besonders günstig.

c) Eine weitere Vergleichsmischung, die in der Mischung 7b an Stelle der Silyl-Verbindung 25 Mol-%, trans-4-Pentyl-cyclohexancarbonsäure[5-nonyloxypyrimidin-2yl]-phenylester enthält weist die folgenden Phasen auf.

X 27 $S_c$ 88 N 116 I

Unter den gleichen Bedingungen wie in Beispiel 7a kristallisiert die Probe bei einer Temperatur von 10 °C. Die erfindungsgemäße Mischung 7a hat den Vorteil, daß die Substanz erst bei viel tieferen Temperaturen auskristallisiert.

**Anwendungsbeispiel 8**

a) Eine flüssigkristalline Mischung aus den folgenden neun Komponenten

| | |
|---|---|
| 5-Octyloxy-2-(4-hexyloxy-phenyl)-pyrimidin | 12 Mol-% |
| 5-Octyloxy-2-(4-octyloxy-phenyl)-pyrimidin | 48 Mol-% |
| 5-Octyloxy-2-(4-butyloxy-phenyl)-pyrimidin | 12 Mol-% |
| 5-Octyloxy-2-(4-decyloxy-phenyl)-pyrimidin | 6,4 Mol-% |
| 5-Octyloxy-2-(4-dodecyloxy-phenyl)pyrimidin | 6,4 Mol-% |
| 5-Octyl-2-(4-dodecyloxy-phenyl)-pyrimidin | 11,2 Mol-% |
| trans-4-Pentyl-cyclohexoncarbonsäure-[4-(5-decylpyrimidin-2-yl)]-phenylester | 11,2 Mol-% |
| Heptansäure-(4-[5-Octylpyrimidin-2-yl])-phenylester | 16 Mol-% |
| 4-Decyloxy-benzoesäure-4-(butyl-dimethylsilyl-butyloxy)-Phenylester | 20 Mol-% |

weist die folgenden Phasenbereiche auf

X -5 $S_c$ 60 $S_A$ 76,5 N 83 I

Die Kristallisationstemperatur bei einer Abkühlrate von 10 °C $min^{-1}$ liegt bei -26 °C.

b) für den Vergleich der physikalischen Eigenschaften wurden die Phasenbereiche einer Mischung gemessen die sich von der obengenannten nur dadurch unterscheidet, daß sie keine Silylkomponente enthält.

Diese Vergleichsmischung weist folgenden Phasenbereiche auf

X -3,5 $S_c$ 69 $S_A$ 80 N 92 I

Die Kristallisationstemperatur bei der obengenannten Abkühlbedingungen liegt bei -19 °C. Offensichtlich führt die Silylkomponente zu einer Erniedrigung des Schmelzpunktes und der Kristallisatonstemperatur.

**Anwendungsbeispiel 9**

a) Eine ferroelektrische Mischung bestehen aus

94 Mol-% der Mischung aus Beispiel 8a

6 Mol-% 5-(Nonyloxypyrimidin-5-yl)-phenyl-(2S,3S)-2-chlor-3-methylpentansäureester

weist die folgenden Phasenbereiche auf:

X -14 $S_c^*$ 61 $S_A^*$ 74 $N^*$ 80 I

Bei einer Temperatur von 25 °C weist diese Mischung eine Polarisation von -5,7 $nC/cm^2$ auf und schaltet bei einer Spannung von 10 $V\mu m^{-1}$ mit $\tau$ = 116,1 $\mu s$.

Der effektive Tiltwinkel dieser Mischung ist 8,4 °.

b) Eine Vergleichsmischung mit 94 Mol-% der Mischung aus Beispiel 8b weist die folgenden Phasenbereiche auf.
X -6 $S_c$ 71 $S_A$ 77 N 89 I
Bei einer Temperatur von 25 °C weist diese Mischung eine Polarisation von -9 $nC \cdot cm^{-2}$ und schaltet bei einer Spannung von 10 V $\mu m^{-1}$ mit $\tau$ = 43 $\mu$s.
Der effektive Tiltwinkel dieser Mischung ist 7,2 °.

Durch den Vergleich der Beispiele 9a mit 9b erkennt man, daß die Silylkomponente in ferroelektrischen Mischungen den Schmelzpunkt erniedrigt, der effektiven Winkel und damit die Transmission des Hellzustandes erhöht.

c) Um den Einfluß der Silylkomponente auf die Schaltzeit zu beurteilen, braucht man eine Mischung, die die gleichen Komponenten wie die Mischung in Beispiel 9b enthält, aber anstelle von 6 % genau 4 % des Dotierstoffes enthält. Diese Mischung weist bei einer Temperatur von 25 °C eine Polarisation von -5,8 $nC \cdot cm^{-2}$ auf und schaltet bei einem Feld von 10 V$\mu m^{-1}$ mit einer Schaltzeit von 180 $\mu$s. Da die spontane Polarisation dieser Mischung genauso groß ist wie in der Mischung 9a sind die beiden Schaltzeiten dieser ferroelektrischen Mischungen vergleichbar und man erkennt, daß die Mischung mit der erfindungsgemäßen Komponente deutlich schneller schaltet.

**Anwendungsbeispiel 10**

a) Eine Mischung aus den 4 Komponenten

| | |
|---|---|
| 5-Octyloxy-2-(4-hexyloxy-phenyl)-pyrimidin | 30 Mol-% |
| 5-Octyloxy-2-(4-octyloxy-phenyl)-pyrimidin | 20 Mol-% |
| 5-Octyloxy-2-(4-butyloxy-phenyl)-pyrimidin | 25 Mol-% |
| trans-4-Pentyl-cyclohexancarbonsäure-[5-(butyldimethylsilyl)--butyloxy)pyrimidin-2-yl]-phenylester | 25 Mol-% |

zeigt folgende flüssigkristalline Phasenbereiche:
X 19 $S_c$ 79 $S_A$ N 102 I
Bei einer Abkühlrate von 10 °C $min^{-1}$ kristallisiert die Substanz bei einer Temperatur von -3 °C.
b) Im Vergleich dazu weist die, in DE 3831226.3 beanspruchte flüssigkristalline Mischung, die sich von der obengenannten Mischung nur dadurch unterscheidet, daß sie keinen Phenylester enthält, folgende Phasenbereiche auf
X 21,5 $S_C$ 85 $S_A$ 95 N 97,5 I
Unter den obengenannten Bedingungen kristallisiert die Mischung bei 12 °C. Die erfindungsgemäße Silylverbindung führt sowohl zu einer Erniedrigung des Schmelzpunktes als auch zu einer drastischen Erniedrigung der Kristallisationstemperatur.

**Anwendungsbeispiel 11**

a) Eine flüssigkristalline Mischung aus den folgenden Komponenten

| | |
|---|---|
| 5-Octyloxy-2-(4-hexyloxy-phenyl)-pyrimidin | 12 Mol-% |
| 5-Octyloxy-2-(4-octyloxy-phenyl)-pyrimidin | 4,8 Mol-% |
| 5-Octyloxy-2-(4-butyloxy-phenyl)-pyrimidin | 12 Mol-% |
| 5-Octyloxy-2-(4-decyloxy-phenyl)-pyrimidin | 6,4 Mol-% |
| 5-Octyloxy-2-(4-dodecyloxy-phenyl)-pyrimidin | 6,4 Mol-% |
| 5-Octyl-2-(4-dodecyloxy-phenyl)-pyrimidin | 11,2 Mol-% |
| trans-4-Pentyl-cyclohexylcarbonsäure-[4-(5-decylpyrimidin-2-yl]-phenylester | 11,2 Mol-% |
| Heptansäure-[4-(5-octylpyrimidin-2-yl)]-phenylester | 16 Mol-% |
| 2-(4-Butyl-dimethylsilyl-butyloxy-phenyl)-5-(4-hexyloxyphenyl)-pyrimidin | 20 Mol-% |

weist folgende Phasenbereiche auf
X -3 $S_c$ 82 $S_A$ 110 I
Bei dem Versuch eine Vergleichsmischung herzustellen, die anstelle der Silylverbindung 20 Mol-% 2-(4′-Octyloxyphenyl)-5-(4″-hexyloxyphenyl)-pyrimidin enthält, konnte beobachtet werden, daß diese Verbindung in Gegensatz zu der obengenannten bei Raumtemperatur nicht löslich ist. Die Einführung der Dimethylsilylgruppe in die Kette führt also zu einer Erhöhung der Löslichkeit dieser Verbindung in flüssigkristallinen Mischungen.

**Anwendungsbeispiel 12**

a) Eine Mischung aus den drei Komponenten

| | |
|---|---|
| 5-(4′-Hexylphenyl)-2-(4′-Octylphenyl)-pyrimidin | 36,6 Mol-% |
| 5-(4′-Pentyloxyphenyl)-2-(4″-hexylphenyl)-pyrimidin | 23,4 Mol-% |
| 5-(4′-Hexyloxyphenyl)-2-(4″-butyl-dimethylsilyl-butyloxy-phenyl)pyrimidin | 40 Mol-% |

weist folgende Phasenbereiche auf
X 27 $S_F$ 43 $S_c$ 95 $S_A$ 192 I
b) Im Vergleich dazu weist die folgende binäre Mischung welche sich nur dadurch unterscheidet, daß sie keine Silylkomponente enthält die folgenden Phasenbereiche auf
X 58 $S_F$ 100 $S_c$ 131 $S_A$ 198 I
Offensichtlich führt die Zugabe der erfindungsgemäßen Komponente zu einer erheblichen Erniedrigung des Schmelzpunktes.

**Anwendungsbeispiel 13**

a) Eine Mischung bestehend aus den folgenden vier Substanzen

| | |
|---|---|
| 5-Octyloxy-2-(4′-butyloxyphenyl)-pyrimidin | 39,6 Mol-% |
| 5-Cyclopropyl-2-(4′-butyloxyphenyl)-pyrimidin | 32,4 Mol-% |
| trans-4-Pentyl-cyclohexylcarbonsäure-[4-(5-decyloxyprimidin-2-yl)]-phenylester | 18 Mol-% |
| 5-Octyloxy-2-(butyl-dimethylsilyl-butyloxyphenyl)-pyrimidin | 10 Mol-% |

weist folgende Phasenbereiche auf
X 15 $S_c$ 79 $S_A$ 85 N 98 I
b) Im Vergleich dazu weist die Mischung, die sich nur dadurch unterscheidet, daß sie keine Silylkomponente enthält folgende Phasenbereiche auf.
X 20 $S_c$ 79,5 $S_A$ 87 N 108 I
Die Zugabe der Silylkomponente führt offensichtlich zu einer Erniedrigung des Schmelzpunktes.

**Anwendungsbeispiel 14**

Eine Mischung bestehend aus
80 Mol-% Mischung Beispiel 13a und
20 Mol-% 4-Decyloxy-(4'-butyldimethylsilyl-butyloxyphenyl) benzoat weist die folgenden Phasen auf
X 0 $S_c$ 65 $S_A$ 78 N 91 I
Der Vergleich mit der Mischung aus Beispiel 13a zeigt, daß diese Silylkomponente den Schmelzpunkt um 15 °C erniedrigt hat.

**Anwendungsbeispiel 15**

a) eine ferroelektrische Mischung besteht zu
92,66 Mol-% der Mischung Beispiel 14
4,02 Mol-% 2R,3R-3-Propyl-oxiran-2-carbonsäure-[4(2-octyloxy-pyrimidin-5-yl)phenyl]-ester
3,32 Mol-% (S)-4-(2-Octyloxy-pyrimidin-5-yl)phenyl-[spiro-(1,3-dioxolan-2,1'-cyclohexan)-4yl]-methyl-ether
und weist folgende Phasenfolge auf
X $S_c$ 65 $S_A$ 77 N 85 I
Die Mischung weist bei 25 °C eine Polerisation von 17 nC $cm^{-2}$ auf und schaltet bei einem Feld von 10 $V\mu m^{-1}$ mit einer Schaltzeit $\tau$ = 102 $\mu$s.

**Anwendungsbeispiel 16**

Eine binäre Mischung aus den beiden Komponenten

| | |
|---|---|
| 2-(Butyl-dimethylsilyl-butyloxyphenyl)-5-oxtyloxypyrimidin | 68 Mol-% |
| 2-(Butyloxybutyloxyphenyl)-5-(ethyl-dimethylsilylhexyloxy) pyrimidin | 32 Mol-% |

weist die folgende Phasenbereiche auf
X 0 $S_c$ 55 I
Dieses Beispiel belegt, daß Silylphenylpyrimidine in ganz besonderer Weise zur Herstellung von flüssigkristallinen Mischungen mit niedrigen Schmelzpunkten geeignet sind.

**Anwendungsbeispiel 17**

a) Eine Mischung aus der folgenden Komponenten

| | |
|---|---|
| trans-4-Pentyl-cyclohexancarbonsäure-[4-(5-dodexyloxy-pyrimidin-2yl)]-phenylester | 28 Mol-% |
| trans-4-(Pentyl-cyclohexancarbonsäure-[4-(5-octyloxy-pyrimidin-2yl)]-phenylester | 42 Mol-% |
| 4-Decyloxybenzoesäure-4-(butyl-dimethylisilyl-butyloxy)-phenylester | 30 Mol-% |

weist die folgenden Phasenbereiche auf
X 16 $S_c$ 64,5 $S_A$ 81 N 92 I
b) Eine Vergleichsmischung die sich von der Mischungs 17a dadurch unterscheidet, daß sie keine Silylkomponente enthält, weist die folgenden Phasenbereiche auf.
X 42 $S_2$ 58 $S_c$ 116 N 186 I
Die Zugabe der Silylverbindung führt aber zu einer Erniedrigung des Schmelzpunktes um 26 °C.

**Anwendungsbeispiel 18**

a) Eine Mischung aus den Komponenten

| | |
|---|---|
| 5-Octyloxy-2-(4-hexyloxy-phenyl)-pyrimidin | 23,8 Mol-% |
| 5-Octyloxy-2-(4-octyloxy-phenyl)-pyrimidin | 11 Mol-% |
| 5-Octyloxy-2-(4-butyloxy-phenyl)-pyrimidin | 25,2 Mol-% |
| 5-Octyloxy-2-(4-decyloxy-phenyl)-pyrimidin | 20 Mol-% |
| 4-Decyloxybenzoesäure-4′-(ethyl-dimethylsilyl-hexyloxy)-phenylester | 20 Mol-% |

zeigt folgende flüssigkristalline Phasenbereiche:
X 9 $S_C$ 54 $S_A$ : 88 I
b) Im Vergleich dazu weist die, in DE 38 31 226.3 beanspruchte flüssigkristalline Mischung, die sich von der obengenannten Mischung nur dadurch unterscheidet, daß sie keine Silylverbindung enthält, folgende Phasenbereiche auf
X 13 $S_c$ 81 $S_A$ 95 N 98 I
Die Zugabe der Silylverbindung führt zu einer Erniedrigung des Schmelzpunktes.

**Anwendungsbeispiel 19**

a) Eine Mischung aus den Komponenten

| | |
|---|---|
| 5-Octyloxy-2-(4-hexyloxy-phenyl)-pyrimidin | 23,8 Mol-% |
| 5-Octyloxy-2-(4-octyloxy-phenyl)-pyrimidin | 11 Mol-% |
| 5-Octyloxy-2-(4-butyloxy-phenyl)-pyrimidin | 25,2 Mol-% |
| 5-Octyloxy-2-(4-decyloxy-phenyl)-pyrimidin | 20 Mol-% |
| 4-Decyloxybenzoesäure-4′-(butyl-dimethylsilylbutyloxy)phenylester | 20 Mol-% |

zeigt folgende flüssigkristalline Phasenbereiche:
X 10 $S_c$ 40 $S_A$ 85 I
b) Im Vergleich dazu weist die, in DE 38 31 226.3 beanspruchte flüssigkristalline Mischung, die sich von der obengenannten Mischung nur dadurch unterscheidet, daß sie keine Silylverbindung enthält, folgende Phasenbereiche auf
X 13 $S_c$ 81 $S_A$ 95 N 98 I
Die Zugabe der Silylverbindung führt also zu einer Erniedrigung des Schmelzpunktes.

**Anwendungsbeispiel 20**

a) Eine Mischung aus den Komponenten

| | |
|---|---|
| 5-Octyloxy-2-(4-hexyloxy-phenyl)-pyrimidin | 23,8 Mol-% |
| 5-Octyloxy-2-(4-octyloxy-phenyl)-pyrimidin | 11 Mol-% |
| 5-Octyloxy-2-(4-butyloxy-phenyl)-pyrimidin | 25,2 Mol-% |
| 5-Octyloxy-2-(4-decyloxy-phenyl)-pyrimidin | 20 Mol-% |
| 5-Octyl-2-[4(Cyclohexyl-dimethylsilyl-butyloxy)phenyl]-pyrimidin | 20 Mol-% |

zeigt folgende flüssigkristallien Phasenbereiche:
X 8 $S_c$ 59 $S_A$ 83 I
b) Im Vergleich dazu weist die, in DE 38 31 226.3 beanspruchte flüssigkristalline Mischung, die sich von der obengenannten Mischung nur dadurch unterscheidet, daß sie keine Silylvebrindung enthält, folgende Phasenbereiche auf
X 13 $S_c$ 81 $S_A$ 85 N 98 I
Die Zugabe dieser Silylverbindung führt zu einer Erniedrigung des Schmelzpunktes von 5 °C.

**Anwendungsbeispiel 21**

Eine Mischung aus 80 Mol-% der Mischung 8b und 20 Mol-% 4-Octyloxybenzoesäure-[4'-(5-butyldimethylsilyl-butyloxypyrimidin-2-yl)phenyl]-ester weist die folgenden Phasenbereiche auf
X-8 $S_C$ 59 N 100 I
Die Kristallisationstemperatur bei einer Abkühlrate von 10 °C $min^{-1}$ liegt bei -30 °C.

Vergleicht man diese Phasenbereiche mit dem Phasenbereich der Mischung 8b, so stellt man fest, daß die Zugabe der Silylkomponente zu einer Erniedrigung des Schmelzpunktes um 4,5 °C und zu einer Verzögerung der Kristallisationstemperatur um 11 °C führt.

**Anwendungsbeispiel 22**

a) Um den Einfluß der Silylpyrimidinverbindungen auf den effektiven Tiltwinkel zu untersuchen, wurden jeweils 10 % verschiedener Komponenten in der folgenden ferroelektrischen Mischung gelöst

| | |
|---|---|
| 5-Octyloxy-2(4-hexyloxy-phenyl)-pyrimidin | 10,5 Mol-% |
| 5-Octyloxy-2(4-octyloxy-phenyl)-pyrimidin | 4,8 Mol-% |
| 5-Octyloxy-2(4-butyloxy-phenyl)-pyrimdin | 11,1 Mol-% |
| 5-Octyloxy-2(4-decyloxy-phenyl)-pyrimidin | 8,8 Mol-% |
| trans-4-Pentyl-cyclohexancarbonsäure-[4(5-dodecylpyrimidin-2-yl)]-phenylester | 16,6 Mol-% |
| 5-Octyl-2(4-decyloxy-phenyl)-pyrimidin | 11,2 Mol-% |
| 5-Octyl-2(4-octyloxy-phenyl)-pyrimidin | 15,2 Mol-% |
| 5-Octyl-2(4-hexyloxyphenyl)-pyrimidin | 16,8 Mol-% |
| (2R,3R)-3-Propyl-oxiran-2-carbonsäure-[4(2-octyloxy-pyrimidin-5-yl)phenyl]-ester | 0,9 Mol-% |
| (R)-4-(5-n-Octyl-pyrimidin-2-yl)-phenyl-2,2-dimethyl-1,3-dioxolan-4-carbonsäureester | 4,1 Mol-% |

Die Struktur der Komponenten und die Änderung des Kontrastes sind in der nachfolgenden Tabelle angegeben.

Die in der Tabelle I dargestellten Meßergebnisse zeigen daß die Verwendung von Silylverbindung (Beispiele: 22d, 22e, 22f) im Vergleich zu den analogen Alkylverbindungen zu einer Erhöhung des effektiven Tiltwinkels führt.

**Tabelle I: Korrelation zwischen Struktur und Kontrast**

| Beispiel Nr. | Struktur des 10 % Mischungsbestandteils in der Mischung 17a | effektiven Tiltwinkel |
|---|---|---|
| 22a | reine Grundmischung | 6,5 |
| 22b | 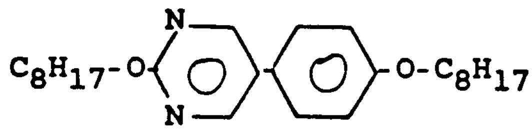 | 8 |
| 22c | 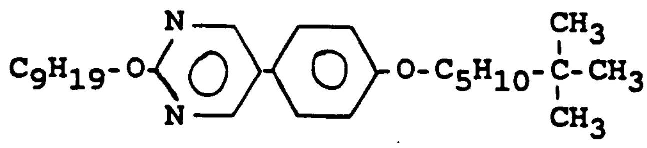 | 8,1 |
| 22d | 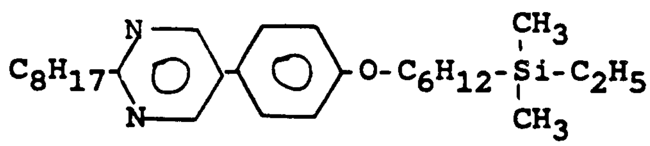 | 8,5 |
| 22e | 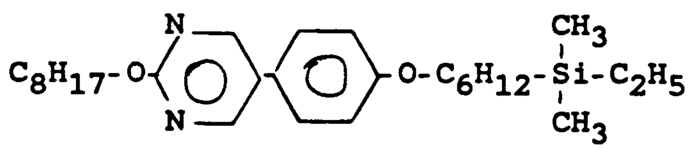 | 9 |
| 22f | 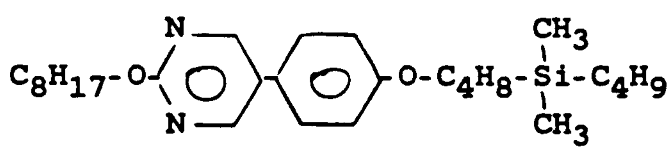 | 9 |

**Anwendungsbeispiel 23**

a) Eine Mischung aus den Komponenten

| | |
|---|---|
| 5-Octyloxy-2-(4-hexyloxy-phenyl)-pyrimidin | 23,8 Mol-% |
| 5-Octyloxy-2-(4-octyloxy-phenyl)-pyrimidin | 11,0 Mol-% |
| 5-Octyloxy-2-(4-butyloxy-phenyl)-pyrimidin | 25,2 Mol-% |
| 5-Octyloxy-2-(4-decyloxy-phenyl)-pyrimidin | 20 Mol-% |
| 5-Octyl-2-[4-(ethyl-dimethylsilyl)-hexyloxy)-phenyl]-pyrimidin | 20 Mol-% |

zeigt folgende flüssigkristalline Phasenbereiche:
X 6,5 $S_c$ 67 $S_A$ 83 N : 86 I
b) Im Vergleich dazu weist die, in DE 38 31 226.3 beanspruchte flüssigkristalline Mischung, die sich von der obengenannten Mischung nur dadurch unterscheidet, daß sie keine Silylkomponente enthält, folgende Phasenbereiche auf

X 5 $S_c$ 68 $S_A$ 83 N 86 I

c) Eine weitere Vergleichsmischung enthält 20 % der folgenden Komponente 5-Octyl-2-[4-(ethyl-dimethylsilylhexyloxyl-phenyl]-pyrimidin in der Mischung 23b und weist die folgende Phasenfolge auf

X 6,5 $S_c$ 5,6 $S_A$ 78 I

Bei dem Vergleich mit der Mischung Beispiel 23a zeigt sich, daß die Lage der Dimethylsilylgruppe einen Einfluß auf den Schmelzpunkt hat. Offensichtlich ist eine mittlere Stellung der Dimethylsilylgruppe in der Kette günstiger.

**Anwendungsbeispiel 24**

Eine flüssigkristalline Mischung besteht aus den folgenden Komponenten

| | |
|---|---|
| 4-Decyloxybenzoesäure-(4′-hexyloxyphenyl)-ester | 22,0 Mol-% |
| 4-Octyloxybenzoesäure-(4′-hexyloxyphenyl)-ester | 26,8 Mol-% |
| 4-Octyloxybenzoesäure-(4′-undecyloxyphenyl)-ester | 16,2 Mol-% |
| 4-Decyloxybenzoesäure-4′-(butyldimethylsilyl-butyloxy)phenylester | 35,0 Mol-% |

X 25 $S_x$ 31 $S_c$ 63,5 $S_A$ 75 N 79 I

Die vergleichbare Mischung ohne Silylkomponente weist folgende Phasen auf:

X 37,4 $S_c$ 72 $S_A$ 74 N 88 I

Die Silylkomponente führt also auch in einer Phenylbenzoat-Mischung zu einer Schmelzpunkterniedrigung von 12 °C.

**Anwendungsbeispiel 25**

a) Eine flüssigkristalline Mischung aus den folgenden neun Komponenten

| | |
|---|---|
| 5-Octyloxy-2-(4-hexyloxy-phenyl)-pyrimidin | 12,1 Mol-% |
| 5-Octyloxy-2-(4-octyloxy-phenyl)-pyrimidin | 4,1 Mol-% |
| 5-Octyloxy-2-(4-butyloxy-phenyl)-pyrimidin | 13,3 Mol-% |
| 5-Octyloxy-2-(4-decyloxy-phenyl)-pyrimidin | 7,4 Mol-% |
| 5-Octyl-2-(4-dodecyloxy-phenyl)-pyrimidin | 10,8 Mol-% |
| trans-4-Pentyl-cyclohexancarbonsäure-[4-(5-decylpyrimidin-2-yl)]-phenylester | 17,2 Mol-% |
| Heptansäure-(4-(5-octylpyrimidin-2-yl))-phenylester | 18,1 Mol-% |
| 4-Decyloxybenzoesäure-4′-(butyl-dimethylsilyl-butyloxy)phenylester | 17,0 Mol-% |

weist die folgenden Phasenbereiche auf

X -16 $S_c$ 60 $S_A$ 75 N 84 I

Die Kristallisationstemperatur bei einer Abkühlrate von 10 °C $min^{-1}$ liegt bei -28 °C.

b) für den Vergleich der physikalischen Eigenschaften wurden die Phasenbereiche einer Mischung gemessen die sich von der obengenannten nur dadurch unterscheidet, daß sie keine Silylkomponente enthält.

Diese Vergleichsmischung weist folgende Phasenbereiche auf

X -9 $S_c$ 73 $S_A$ 77 N 96 I

Die Kristallisationstemperatur bei der obengenannten Abkühlbedingungen liegt bei -17 °C. Offensichtlich führt die Silylkomponente zu einer Erniedrigung des Schmelzpunktes und der Kristallisationstemperatur.

**Anwendungsbeispiel 26**

Eine ferroelektrische Mischung besteht aus

92,66 Mol-% der Mischung aus Beispiel 25

4,02 Mol-% 2R,3R-3-Propyl-oxiran-2-carbonsäure-[4(2-octyloxy-pyrimidin-5-yl)-phenyl]-ester

3,32 Mol-% (S)-4-(2-Octyloxy-pyrimidin-5-yl)phenyl-spiro-(1,3-dioxolan-2,1-cyclohexan)-4-yl)-methyl-ether und weist folgende Phasenbereiche auf

X -19 $S_c^*$ 60 $S_A^*$ 73 $N^*$ 82 I

Die Mischung hat bei einer Temperatur von 25 °C eine spontane Polarisation von 10,5 nC $cm^{-2}$ auf und

schaltet bei einem Feld von 10 V $\mu m^{-1}$ mit einer Schaltzeit $\tau$ von 102 $\mu s$.

**Anwendungsbeispiel 27**

Eine flüssigkristalline Mischung besteht aus
60 Mol-% der Mischung 25 b
40 Mol-% 4-Decylbenzoesäure-4'-(butyl-dimethyl)-silylbutyloxy)phenylester
und weist folgende Phasenbereiche auf
X -29 $S_c$ 48 $S_A$ 71 N 73 I
Die Kristallisationstemperatur bei einer Abkühlrate von 10 °C $min^{-1}$ liegt bei -39 °C.

Der Vergleich mit den Daten der Mischung 25b belegt, daß die erfindungsgemäße Verbindung in der Mischung zu einer erheblichen Schmelzpunkterniedrigung und zu einer starken Absenkung der Kristallisationstemperatur führt.

**Anwendungsbeispiel 28**

Eine flüssigkristalline Mischung besteht aus
80 Mol-% der Mischung 25b
20 Mol-% 4-Octyloxybenzoesäure-[4'-(5"-butyl-dimethylsilylbutyloxy-pyrimdin-2"-yl)phenyl]-ester
X -17 $S_c$ 58 N 101 I
Der Vergleich mit den Daten der Mischung 25 b belegt, daß die erfindungsgemäßen Silylverbindungen in Mischungen zu einer Erniedrigung des Schmelzpunktes führen.

**Anwendungsbeispiel 29**

a) Eine ferroelektrische flüssigkristalline Mischung besteht aus 6 Komponenten

| | |
|---|---|
| 5-Octyloxy-2-(4-butyloxy-phenyl)-pyrimidin | 24 Mol-% |
| 5-Octyloxy-2-(4-hexyloxy-phenyl)-pyrimidin | 22,8 Mol-% |
| 5-Octyloxy-2-(4-oxtyloxy-phenyl)-pyrimidin | 10,8 Mol-% |
| 5-Octyloxy-2-(4-dexyloxy-phenyl)-pyrimidin | 19,2 Mol-% |
| trans-4-Pentyl-cyclohexancarbonsäure-[4-(5-decyl-pyrimidin-2-yl)]-phenylester | 13,5 Mol-% |
| (2S,3S)-2[4-(5-Butyldimethylsilyl-butyloxy-pyrimidin-2-yl)-phenyloxy]-methyl-3-butyloxiran | 10 Mol-% |

zeigt folgende flüssigkristalline Phasenbereiche:
X 6,3 $S_c^*$ 81 N* 98 I
und weist bei 20 °C eine spontane Polyrisation von 26 $^{nC•cm]-2}$ und eine Schaltzeit von 174 $\mu s$ auf.
b) Im Vergleich dazu weist die, in DE 3831226 beanspruchte flüssigkristalline Mischung, die sich von der obengenannten ferroelektrischen Mischung nur dadurch unterscheidet, daß sie keinen Dotierstoff enthält, folgende Phasenbereiche auf
X 9 $S_c$ 84 $S_A$ 93 N 105 I
Die ferroelektrische Mischung weist dazu im Verlgeich einem um 3 °C niedrigeren Schmelzpunkt auf.
Dieses Beispiel belgt, daß die Silylverbindungen auch als Dotierstoffe in ferroelektrischen Mischungen geeignet sind.

**Anwendungsbeispiel 30**

Eine Mischung besteht aus
80 Mol-% der Mischung aus Anwendungsbeispiel 25b
20 Mol-% 4(Butyldimethylsilyl)butyl[4-(5-(4-decylphenyl-1,3,4-thiadiazol-2yl)phenyl]-ether
X-11 $S_c$ 72 $S_A$ 83 N 93 I
Ein Vergleich mit den Daten der Mischung aus den Anwendungsbeispiel 25 b zeigt, daß die Zugabe der Silylverbindung dieses Thiadiazols zu einer Erniedrigung des Schmelzpunktes um 2 °C führt.

**Anwendungsbeispiel 31**

a) Eine ferroelektrische Mischung besteht aus
90 Mol-% der Mischung aus dem Anwendungsbeispiel 29b
10 Mol-% (2R,3R)-3-Propyl-oxiran-2-carbonsäure-[4-(5-(4-butyldimethylsilylbutyloxy)-pyrimidin-2-yl)-phenyl]-ester
Diese Mischung weist bei einer Temperatur von 20 °C eine Polarisation von 97 $nC \cdot cm^{-2}$ auf und schaltet bei einem Feld von $10V\mu m^{-1}$ in 67 $\mu s$.
b) Zum Vergleich bietet sich eine 10 % Dotierstoffmischung ausgehend von der Mischung 29b an, bei der sich der Dotierstoff nur durch die Dimethylsilylgruppe unterscheidet. Die Dotierstoffmischung mit
10 Mol-% (2R,3R)-3-Propyloxiran-2-carbonsäure-[(octyloxypyrimidin2-yl)phenyl]-ester
weist bei einer Temperatur von 20 °C eine Polarisation von 37 $nCcm^{-2}$ auf.
Offensichtlich zeichnet sich der dimethylsilyl-haltige Dotierstoff dadurch aus, daß er in Mischungen eine spontane Polarisation induziert, die 2,6 mal höher liegt als bei der vergleichbaren Dotierstoffmischung.

**Anwendungsbeispiel 32**

a) Eine Mischung aus folgenden drei Komponenten

| | |
|---|---|
| 2 Octyl-5-[4-decyloxyphenyl]-1,3,4 thiodiazol | 26,4 Mol-% |
| 5-[4-trans-Hexylcycloheyl]-2-[4-decylphenyl]-1,3,4 thiadiazol | 33,6 Mol-% |
| 4-(Butyldimethylsilyl)butyl-[4-(5-(4-decylphenyl)-1,3,4 thiadiazol-2-yl)phenyl]-ether | 40 Mol-% |

hat die folgende Phasenfolge:
X 22 $S_c$ 116 I
b) Im Vergleich dazu weist eine flüssigkristalline Mischung, die sich von der oben genannten nur dadurch unterscheidet, daß sie keine Silyl-Komponente enthält, folgende Phasenfolge auf
X 47 $S_c$ 111 $S_A$ 120
Die Silyl-Komponente führt also zu einer Schmelzpunkterniedrigung von 25 °C.

**Patentansprüche**

**1.** Flüssigkristalline Silylalkyl- oder -alkenyl-Verbindungen der allgemeinen Formel (I)

$$R^1(-A^1)_j(-M^1)_k(-A^2)_l(-M^2)_m(-A^3)_n-G-\underset{R^8}{\overset{R^6}{Si}}-R^7 \quad (I)$$

in der bedeuten:

R¹ — geradkettiges oder verzweigtes (mit oder ohne asymmetrisches C-Atom) Alkyl oder Alkenyl mit 2 bis 16 C-Atomen, wobei auch eine oder zwei nicht-benachbarte $-CH_2$-Gruppen durch -O-, -S-, -CO-, -CO-O-, -O-CO- oder -O-CO-O ersetzt sein können und wobei auch H durch F ersetzt sein kann,
oder einer der nachfolgenden Reste $OCF_3$, $OCHF_2$

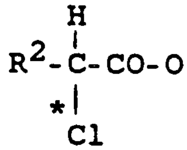
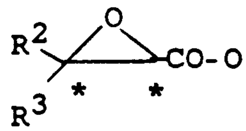
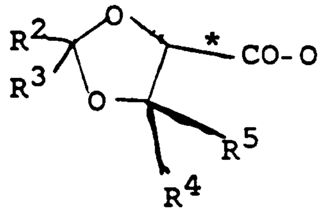

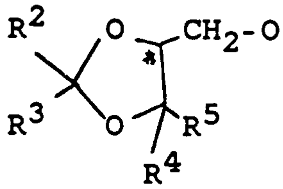
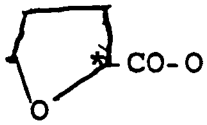
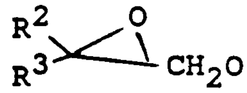
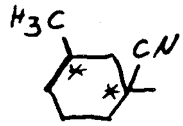
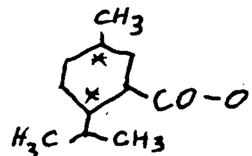

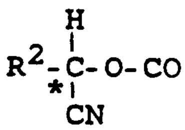
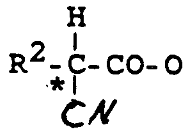
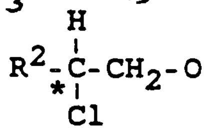

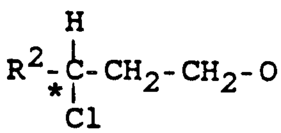
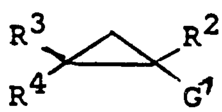
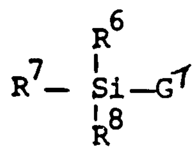

$A^1,A^2,A^3$ gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6-diyl, Pyridin-2,5-diyl, Pyrimidin-2,5-diyl, (1,3,4)-Thiadiazol-2,5-diyl, 1,3-Dioxan-2,5-diyl, 1,3-Dithian-2,5-diyl

$M^1,M^2$ gleich oder verschieden CO-O, O-CO, CO-S, S-CO, $CH_2$-O, O-$CH_2$, C≡C, CH = CH

$G,G^1$ geradkettiges oder verzweigtes Alkylen mit 1 bis 16 C-Atomen oder Alkenylen mit 2 bis 16 C-Atomen, bei dem auch eine oder zwei nicht-benachbarte -$CH_2$-Gruppen durch -O-, -S-, -O-CO-, -CO-O-, -S-CO- oder -CO-S- ersetzt sein können, mit der Maßgabe, daß Si nur an ein C gebunden ist, das H und/oder C als Nachbaratome hat,

$R^2,R^3,R^4,R^5$ H oder geradkettiges oder verzweigtes Alkyl mit 1 bis 16 oder Alkenyl mit 2 bis 16 C-Atomen, bei dem auch eine -$CH_2$-Gruppe durch -O-, -CO-O- oder -O-CO- ersetzt sein kann, oder cyclisches Alkyl mit 3 bis 8 C-Atomen

$R^6,R^7,R^8$ geradkettiges oder verzweigtes Alkyl mit 1 bis 16 C-Atomen oder Alkenyl mit 2 bis 16 C-Atomen, bei denen auch eine oder zwei nicht-benachbarte $CH_2$-Gruppen durch -O-, -CO-O oder -O-CO- ersetzt sein können, mit der Maßgabe, daß sie nur an ein C gebunden ist, das H und/oder C als Nachbaratome hat, oder cyclisches Alkyl mit 3 bis 8 C-Atomen, oder gemeinsam mit dem Si auch

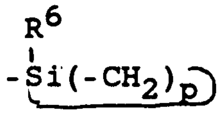 oder 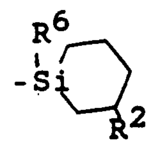

j,k,l,m,n Null oder 1

p 3 bis 7

mit der Maßgabe, daß j + l + n = 2 oder 3.

2. Ausführungen nach Anspruch 1, dadurch gekennzeichnet, daß in der allgemeinen Formel (I) die Gruppierung $(-A^1)_j(-M^1)_k(-A^2)_l(-M^2)_m(-A^3)_n$- bedeutet:

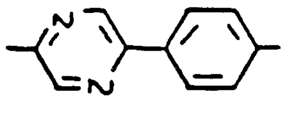 , 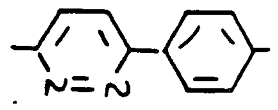 , 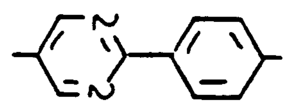 ,

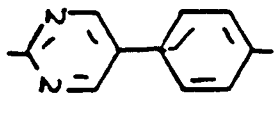 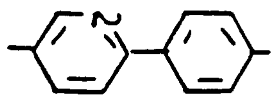 , 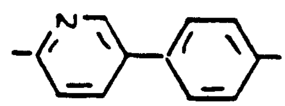 ,

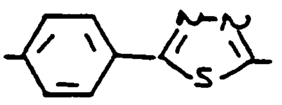 , 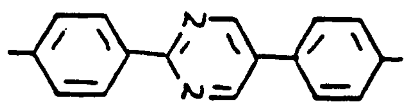 , 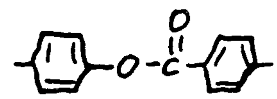

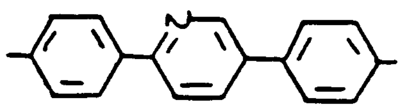 , 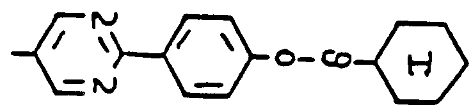 ,

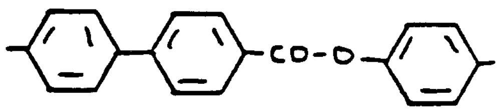 , 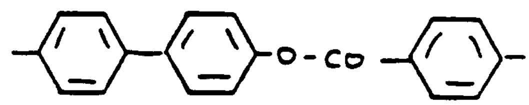 ,

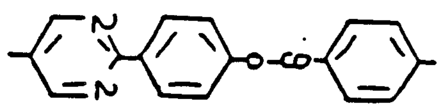 , 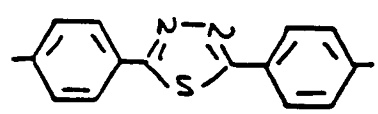 ,

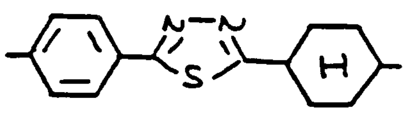 , 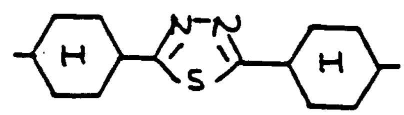 ,

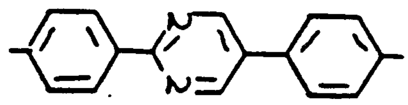 , 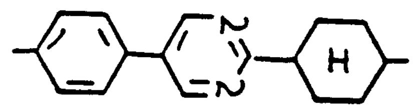 .

3. Ausführungsform nach Anspruch 1 oder 2, dadurch gekennzeichnet, daß mindestens einer der Reste $A^1$, $A^2$, $A^3$ 1,4-Phenylen und ein weiterer Pyrimidin-2,5-diyl bedeuten.

4. Verfahren zur Herstellung der Silylalkyl- oder -alkenyl-Verbindungen der allgemeinen Formel (I) nach einem der Ansprüche 1 bis 3, dadurch gekennzeichnet, daß mesogene monofunktionell-reaktionsfähige Grundkörper der allgemeinen Formel (II) mit monofunktionell-reaktionsfähigen Silylalkyl-oder -alkenyl-Verbindung der allgemeinen Formel (III) umgesetzt werden.

$R^1(-A^1)_j(-M^1)_k(-A^2)_l(-M^2)_m(-A^3)_n$-X (II)

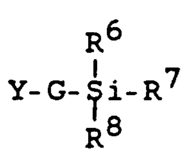 (III)

wobei X = OH, O-Alkali, COOH oder COO-Alkali und Y bei der Reaktion abgehende Substituenten wie H, OH, Alkali, Halogen, Toluolsulfonyloxy oder Methylsulfonyloxy bedeuten.

**5.** Verfahren zur Herstellung der Silylalkyl- oder -alkenyl-Verbindungen der allgemeinen Formel (I) nach einem der Ansprüche 1 bis 3, dadurch gekennzeichnet, daß man Silane der allgemeinen Formel $HSiR^7R^8Cl$ oder $ClSiR^6R^7R^8$ mit Verbindungen des Typs Z-$C_nH_{2n-1}$ bzw. Z-$C_nH_{2n}$-Hal umsetzt, wobei n = 1 bis 16 und $Z = R^1(-A^1)_j(-M^1)_k(-A^2)_l(-M^2)_m(-A^3)_n$ bedeuten.

**6.** Verwendung der Silylalkyl- oder -alkenyl-Verbindungen der allgemeinen Formel (I) nach Anspruch 1 als Komponente in Flüssigkristallmischungen.

**7.** Verwendung nach Anspruch 6, dadurch gekennzeichnet, daß die Flüssigkristallmischung nematisch, insbesondere chiral-nematisch ist.

**8.** Verwendung nach Anspruch 6, dadurch gekennzeichnet, daß die Flüssigkristallmischung smektisch, insbesondere chiral-smektisch, bevorzugt ferroelektrisch ist.

**9.** Flüssigkristalline Mischung enthaltend mindestens eine Silylalkyl- oder -alkenyl-Verbindung der allgemeinen Formel (I) nach Anspruch 1.

**10.** Elektrooptisches Bauteil enthaltend eine flüssigkristalline Mischung nach Anspruch 9.

**Claims**

**1.** A liquid-crystalline silylalkyl or silylalkenyl compound of the formula (I)

$$R^1(-A^1)_j(-M^1)_k(-A^2)_l(-M^2)_m(-A^3)_n\text{-}G\text{-}\overset{\displaystyle R^6}{\underset{\displaystyle R^8}{Si}}\text{-}R^7 \qquad (I)$$

in which

$R^1$ denotes straight-chain or branched alkyl or alkenyl (with or without asymmetrical carbon atom) containing 2 to 16 carbon atoms, it also being possible for one or two nonadjacent $-CH_2-$ groups to be substituted by -O-, -S-, -CO-, -CO-O-, -O-CO- or -O-CO-O- and also for hydrogen to be replaced by fluorine,
or denotes one of the following radicals $OCF_3$, $OCHF_2$,

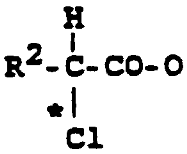
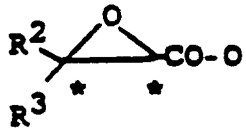
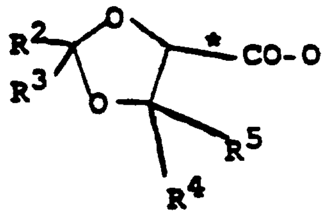

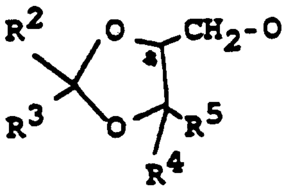
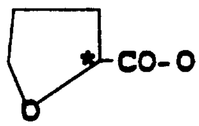
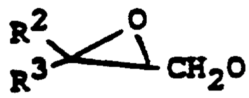
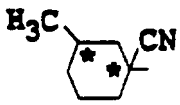
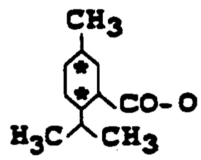

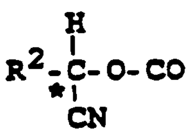
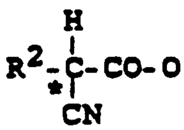
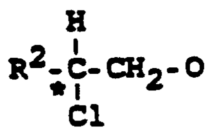

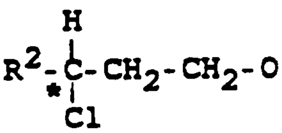
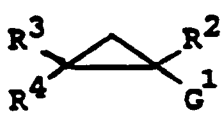
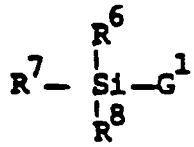

| | |
|---|---|
| $A^1$,$A^2$,$A^3$ | denote, identically or differently, 1,4-phenylene in which I or 2 hydrogens may be replaced by fluorine, chlorine and/or CN, trans-1,4-cyclohexylene in which 1 or 2 hydrogens may be replaced by fluorine, chlorine, CN and/or $CH_3$, pyrazine-2,5-diyl, pyridazine-3,6-diyl, pyridine-2,5-diyl, pyrimidine-2,5-diyl, 1,3,4-thiadiazole-2,5-diyl, 1,3-dioxane-2,5-diyl, 1,3-dithiane-2,5-diyl, |
| $M^1$,$M^2$ | denote, identically or differently, CO-O, O-CO, CO-S, S-CO, $CH_2$-O, O-$CR_2$, $C\equiv C$, CH = CH, |
| G, $G^1$ | denote straight-chain or branched alkylene containing 1 to 16 carbon atoms or alkenylene containing 2 to 16 carbon atoms, in which one or two nonadjacent -$CH_2$- groups may also be replaced by -O-, -S-, -O-CO-, -CO-O-, -S-CO- or -CO-S-, with the proviso that Si is bound only to a carbon which has hydrogen and/or carbon as adjacent atoms, |
| $R^2$,$R^3$,$R^4$,$R^5$ | denote hydrogen or straight-chain or branched alkyl containing 1 to 16 or alkenyl containing 2 to 16 carbon atoms, in which a -$CH_2$- group may also be replaced by -O-, -CO-O- or -O-CO-, or cyclic alkyl containing 3 to 8 carbon atoms, |
| $R^6$,$R^7$,$R^8$ | denote straight-chain or branched alkyl containing 1 to 16 carbon atoms or alkenyl containing 2 to 16 carbon atoms, in which one or two nonadjacent -$CH_2$- groups may also be replaced by -O-, -CO-O- or -O-CO-, with the proviso that Si is bonded only to a carbon which has hydrogen and/or carbon as adjacent atoms, or cyclic alkyl containing 3 to 8 carbon atoms, or else, jointly with the Si, denote |

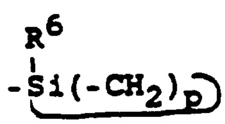 or 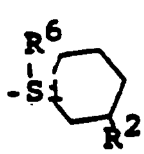

| | |
|---|---|
| j,k,l,m,n | denote 0 or 1, |
| p | denotes 3 to 7 |

with the proviso that j + l + n = 2 or 3.

**2.** An embodiment as claimed in claim 1, wherein, in the formula (I), the group $(-A^1)_j(-M^1)_k(-A^2)_l-(M^2)_m(-A^3)_n-$ denotes:

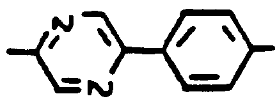 , 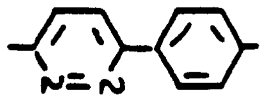 , 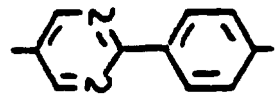 ,

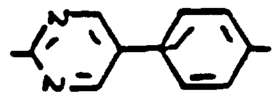 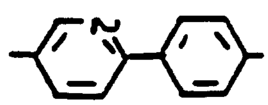 , 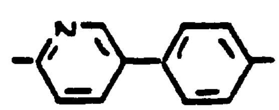 ,

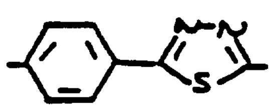 , 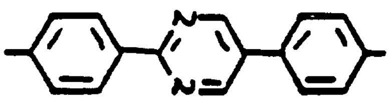 , 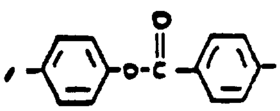

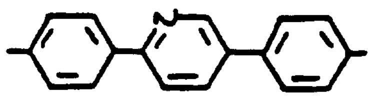 , 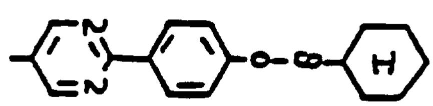 ,

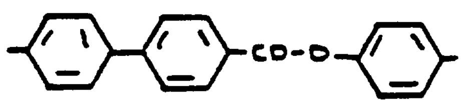 , 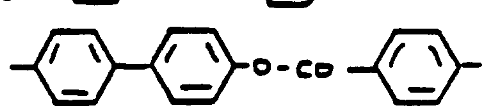 ,

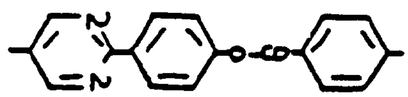 , 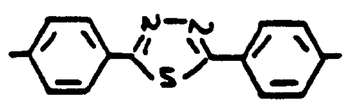 ,

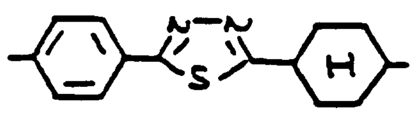 , 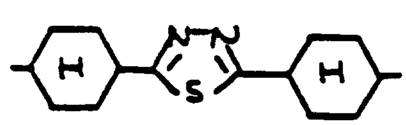 ,

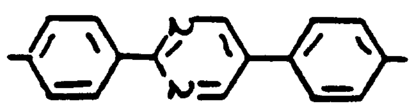 , 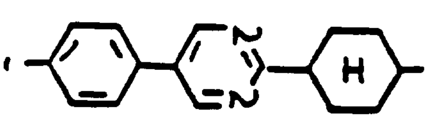 .

**3.** An embodiment as claimed in claim 1 or 2, wherein at least one of the radicals $A^1$, $A^2$, $A^3$ denotes 1,4-phenylene and another denotes pyrimidine-2,5-diyl.

**4.** A process for preparing a silylalkyl or silylalkenyl compound of the formula (I) as claimed in one of claims 1 to 3, which comprises reacting a mesogenic monofunctionally reactive parent substance of the formula (II) with a monofunctionally reactive silylalkyl or silylalkenyl compound of the formula (III):

$R^1(-A^1)_j(-M^1)_k(-A^2)_l(-M^2)_m(-A^3)_n-X$ (II)

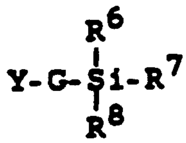

(III)

where X = OH, O-alkali metal, COOH or COO-alkali metal and Y denotes leaving substituents in the reaction such as H, OH, alkali metal, halogen, toluenesulfonyloxy or methylsulfonyloxy.

**5.** The process for preparing the silylalkyl or silylalkenyl compound of the formula (I) as claimed in one of claims 1 to 3, wherein silanes of the formula $HSiR^7R^8Cl$ or $ClSiR^6R^7R^8$ are reacted with compounds of the type $Z\text{-}C_nH_{2n-1}$ or $Z\text{-}C_nH_{2n}\text{-Hal}$, where n = 1 to 16 and $Z = R^1(-A^1)_j(-M^1)_k(-A^2)_l(-M^2)_m(-A^3)_n$.

**6.** The use of silylalkyl or silylalkenyl compounds of the formula (I) as claimed in claim 1 as a component in liquid-crystal mixtures.

**7.** The use as claimed in claim 6, wherein the liquid-crystal mixture is nematic, in particular chiral nematic.

**8.** The use as claimed in claim 6, wherein the liquid-crystal mixture is smectic, in particular chiral smectic, preferably ferroelectric.

**9.** A liquid-crystalline mixture containing at least one silylalkyl or silylalkenyl compound of the formula (I) as claimed in claim 1.

**10.** An electro-optical component containing a liquid-crystalline mixture as claimed in claim 9.

**Revendications**

**1.** Composés cristaux liquides silylalkyles ou silylalcényles de formule generale I

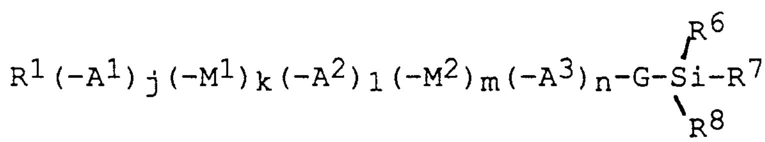

(I)

dans laquelle signifient :

$R^1$ représente un alkyle ou un alcényle linéaire ou ramifié (avec ou sans atome de carbone asymétrique) avec un nombre d'atomes de carbone de 2 à 16, où on peut aussi remplacer un ou deux groupes $-CH_2-$ non voisins par -O-, -S-, -CO-, -CO-O-, -O-CO- ou -O-CO-O- et où on peut aussi remplacer H par F, ou l'un des radicaux ci-après $OCF_3$, $OCHF_2$

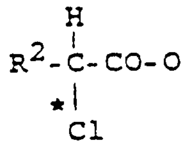 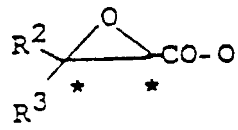 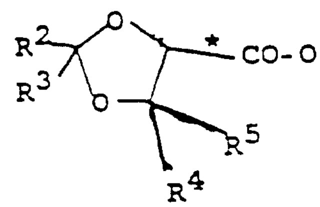

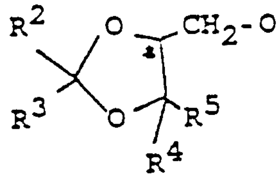 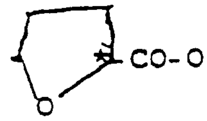 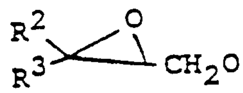

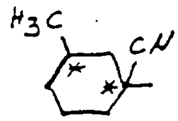 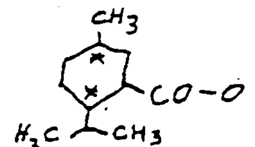

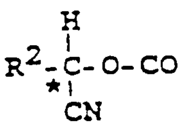 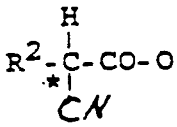 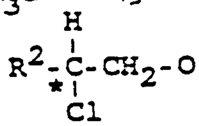

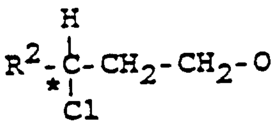 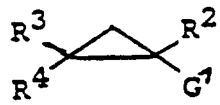 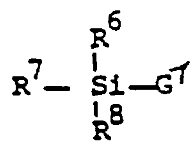

| | |
|---|---|
| $A^1$, $A^2$, $A^3$ | sont identiques ou différents et signifient le 1,4-phénylène dans lequel on peut remplacer 1 ou 2 H par F, Cl et/ou CN, le trans-1,4-cyclohexylène, dans lequel on peut remplacer 1 ou 2 H par F, Cl, CN et/ou $CH_3$, un pyrazine-2,5-diyle, un pyridazine-3,6-diyle, un pyridine-2,5-diyle, un pyrimidine-2,5-diyle, un (1,3,4)-thiadiazol-2,5-diyle, un 1,3-dioxane-2,5-diyle, un 1,3-dithian-2,5-diyle, |
| $M^1$, $M^2$ | sont identiques ou différents et représentent CO-O, O-CO, CO-S, S-CO, $CH_2$-O, O-$CH_2$, C≡C, CH=CH, |
| G, $G^1$ | représente un alkylène avec 1 à 16 atomes de carbone, ou un alcénylène avec 2 à 16 atomes de carbone, linéaire ou ramifié, dans lequel on peut aussi remplacer un ou deux groupes -$CH_2$- non voisins par -O-, -S-, -O-CO-, - CO-O-, -S-CO- ou -CO-S- à condition que Si ne soit lié qu'à un atome de carbone, qui a pour atomes voisins H et/ou C, |
| $R^2$, $R^3$, $R^4$, $R^5$ | représentent H ou un alcényle avec 2 à 16 atomes de carbone ou un alkyle avec 1 à 16 atomes de carbone, linéaire ou ramifié, dans lequel aussi on peut remplacer un groupe -$CH_2$- par -O-, -CO-O- ou -O-CO-, ou un alkyle cyclique avec 3 à 8 atomes de carbone |
| $R^6$, $R^7$, $R^8$ | représentent un alcényle avec 2 à 16 atomes de carbone ou un alkyle avec 1 à 16 atomes de carbone linéaire ou ramifié dans lequel aussi on peut remplacer un ou deux groupes -$CH_2$- non voisins par -O-, -CO-O ou -O-CO-, à condition qu'il ne soit lié qu'à un atome de carbone, qui a pour atomes voisins H et/ou C, ou un alkyle cyclique avec 3 à 8 atomes de carbone, ou ensemble avec le Si forment aussi le groupe : |

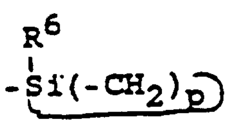 ou 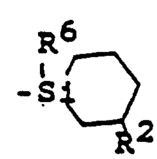

| | |
|---|---|
| j, k, l, m, n | sont égaux à zéro ou 1 |
| p | vaut de 3 à 7 |
| | à la condition que j + l + n = 2 ou 3. |

**2.** Modes d'exécution selon la revendication 1, caractérisé en ce que dans la formule générale I, le groupement
$(-A^1)_j(-M^1)_k(-A^2)_l(-M^2)_m(-A^3)_n-$
signifie :

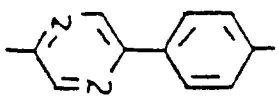 , 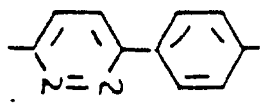 , 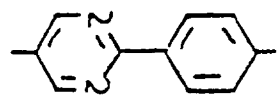 ,

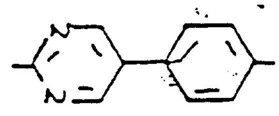 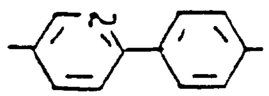 , 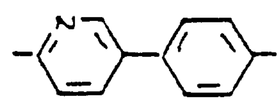 ,

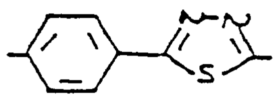 , 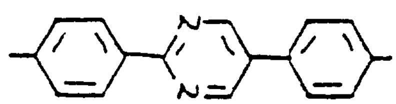 , 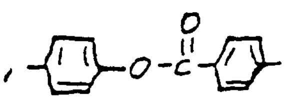

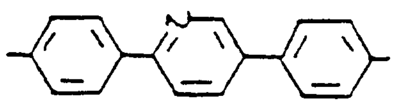 , 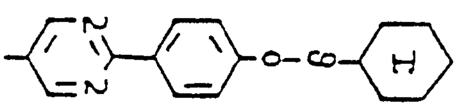 ,

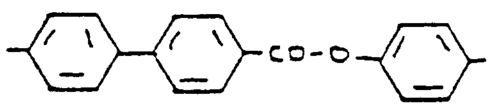 , 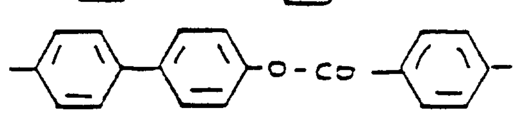 ,

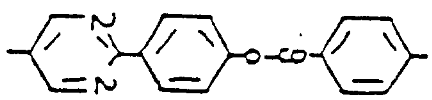 , 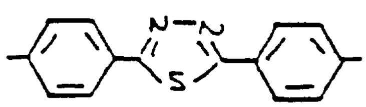 ,

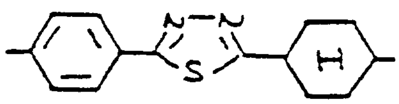 , 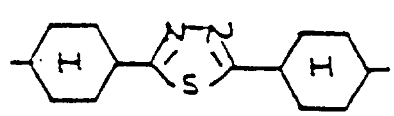 ,

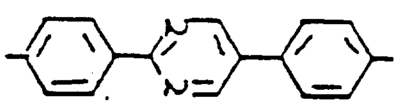 , 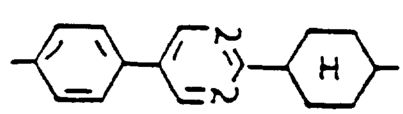 .

**3.** Mode d'exécution selon la revendication 1 ou 2, caractérisé en ce que au moins un des radicaux $A^1$, $A^2$, $A^3$ signifie le 1,4-phénylène et un autre le pyrimidine-2,5-diyle.

**4.** Procédé pour la préparation des composés silylalkyles ou silylalcényles de formule générale I selon l'une des revendications 1 à 3, caractérisé en ce qu'on fait réagir les éléments de base réactifs monofonctionnels mésogènes de formule générale II sur un composé silylalkyle ou silylalcényle réactif monofonctionnel de formule générale III

$$R^1(-A^1)_j(-M^1)_k(-A^2)_l(-M^2)_m(-A^3)_n-X \qquad (II)$$

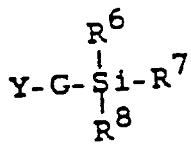

(III)

où X = OH, O-alcali, COOH ou COO-alcali et Y signifie le substituant qui se sépare au cours de la réaction, comme H, OH, un alcali, un halogène, le toluènesulfonyloxy ou le méthylsulfonyloxy.

**5.** Procédé pour la préparation des composés silylalkyles ou silylalcényles de formule générale I selon l'une des revendications 1 à 3, caractérisé en ce qu'on fait réagir des silanes de formules générales $HSiR^7R^8$-Cl ou $ClSiR^6R^7R^8$ avec des composés du type Z-$C_nH_{2n-1}$ ou Z-$C_nH_{2n}$-Hal, où n = 1 à 16 et Z = $R^1(-A^1)_j(-M^1)_k(-A^2)_l(-M^2)_m(-A^3)_n$.

**6.** Utilisation des composés silylalkyles ou silylalcényles de formule générale I selon la revendication 1 en tant que composants de mélanges cristaux liquides.

**7.** Utilisation selon la revendication 6, caractérisée en ce que le mélange cristaux liqudies est nématique, plus particulièrement chiralo-nématique.

**8.** Utilisation selon la revendication 6, caractérisée en ce que le mélange cristaux liquides est smectique, plus particulièrement chiralo-smectique, de préférence ferroélectrique.

**9.** Mélange cristaux liquides contenant au moins un composé silylalkyle ou silylalcényle de formule générale I selon la revendication 1.

**10.** Element de structure électro-optique contenant un mélange cristaux liquides selon la revendication 9.